# EUROPEAN PATENT APPLICATION

(11) **EP 4 404 315 A2**
(43) Date of publication of application: **24.07.2024**
(21) Application number: 24152061.8
(22) Date of filing: 16.01.2024
(51) Int. Cl.: H01M 8/0228, H01M 8/0282, H01M 8/2432, H01M 8/2483, H01M 8/026, H01M 8/12

(54) **GLASS CERAMIC SEAL MATERIAL FOR FUEL CELL STACKS**

(30) Priority: 17.01.2023 US 202363480134 P
(71) Applicant: Bloom Energy Corporation, San Jose, CA 95134 (US)
(72) Inventor: GASDA, Michael, San Jose, CA 95134 (US); PAN, Keji, San Jose, CA 95134 (US); SCHMAUSS, Travis A., San Jose, CA 95134 (US); EL BATAWI, Emad, San Jose, CA 95134 (US); MUHL, Thuy Thanh, San Jose, CA 95134 (US); BONE, Sagar, San Jose, CA 95134 (US); BYRD, Adam, San Jose, CA 95134 (US)
(74) Representative: Wichmann, Hendrik

(57) **Abstract**

An electrochemical cell stack includes a first interconnect, a second interconnect, an electrochemical cell located between the first interconnect and the second interconnect, and a fuel impermeable, hermetically sealed wall contacting opposing surfaces of the first interconnect and the second interconnect. The fuel impermeable, hermetically sealed wall includes a stack of a glass or glass ceramic seal and a gas impermeable layer. The electrochemical cell is laterally offset from ends of the first interconnect and the second interconnect.

## Description

### FIELD

The present disclosure is directed to glass ceramic seal materials and, more particularly, to glass ceramic seal materials for use in fuel cell stacks.

### BACKGROUND

In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrocarbon fuel, such as methane, natural gas, pentane, ethanol, or methanol. The fuel cell, operating at a temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and air are distributed to each cell using risers contained within the stack. In other words, gases flow through openings or holes in the supporting layer of each fuel cell, such as the electrolyte layer, and gas flow separator of each cell. In externally manifolded stacks, the stack is open on the fuel and air inlet and outlet sides, and the fuel and air are introduced and collected independently of the stack hardware. For example, the gases flow in separate channels between the stack and the manifold housing in which the stack is located.

Fuel cell stacks are frequently built from a multiplicity of cells in the form of planar elements, tubes, or other geometries. Fuel and air have to be provided to the electrochemically active surfaces, which can be large. One component of a fuel cell stack is the so called gas flow separator (referred to as a gas flow separator plate, bipolar plate, or interconnect in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. In this case, the gas flow separator plate which functions as an interconnect is made of or contains an electrically conductive material.

### SUMMARY

According to various embodiments of the present disclosure, an electrochemical cell stack includes a first interconnect, a second interconnect, an electrochemical cell located between the first interconnect and the second interconnect, and a fuel impermeable, hermetically sealed wall contacting opposing surfaces of the first interconnect and the second interconnect. The fuel impermeable, hermetically sealed wall includes a stack of a glass or glass ceramic seal and a gas impermeable layer. The electrochemical cell is laterally offset from ends of the first interconnect and the second interconnect.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a prior art fuel cell column, FIG. 1B is a perspective view of one counter-flow solid oxide fuel cell (SOFC) stack included in the column of FIG. 1A, and FIG. 1C is a side cross-sectional view of a portion of the stack of FIG. 1B.
FIG. 2A is a top view of the air side of a prior art interconnect of the stack of FIG. 1B, and FIG. 2B is a top view of the fuel side of the prior art interconnect.
FIG. 3A is a perspective view of a fuel cell stack, according to various embodiments of the present disclosure, FIG. 3B is an exploded perspective view of a portion of the stack of FIG. 3A, FIG. 3C is a top view of the fuel side of an interconnect included in the stack of FIG. 3A, and FIG. 3D is a schematic view of a fuel cell included in the stack of FIG. 3A.
FIGS. 4A and 4B are plan views showing, respectively, an air side and a fuel side of the crossflow interconnect of FIG. 3C, according to various embodiments of the present disclosure.
FIG. 5A is a plan view showing the air side of the interconnect of FIG. 3C, and FIG. 5B is a plan view showing a modified version of the interconnect of FIG. 5A.
FIG. 6A is a sectional perspective view of two interconnects of FIGS. 4A and 4B, and a fuel cell as assembled in the fuel cell stack of FIG. 3A, according to various embodiments of the present disclosure, and FIG. 6B is a top view showing the overlap of the fuel cell and seals on the fuel side of an interconnect of FIG. 6A.
FIG. 7 is a side cross-sectional view of a portion of a fuel cell stack according to various embodiments of the present disclosure.
FIGS. 8A and 8B respectively comprise a top view of an air side of an interconnect, and a side cross-sectional view of a portion of a fuel cell stack containing the interconnect and an electrolyte supported cell including a riser seal.
FIGS. 9A and 9B respectively comprise a top view of a fuel side of an interconnect, and a side cross-sectional view of a portion of the fuel cell stack containing the interconnect and the electrolyte supported cell of FIGS. 8A and 8B.
FIGS. 10A and 10B respectively comprise a top view of an air side of an interconnect, and a side cross-sectional view of a portion of the fuel cell stack containing the interconnect and an anode supported cell including a riser seal according to a comparative example.
FIGS. 11A and 11B respectively comprise a top view of a fuel side of an interconnect and a side cross-sectional view of a portion of the fuel cell stack containing the interconnect and the anode supported cell of FIGS. 10A and 10B.
FIGS. 12A, 12B and 12C respectively comprise a top view of a fuel side of an interconnect, a side cross-sectional view of a portion of the fuel cell stack containing the interconnect, and an anode supported cell including a composite perimeter seal according to one embodiment of the present disclosure.
FIGS. 13A, 13B and 13C respectively comprise a top view of a fuel side of an interconnect, a side cross-sectional view of a portion of the fuel cell stack containing the interconnect, and an anode supported cell including a composite perimeter seal according to another embodiment of the present disclosure.
FIG. 14A is a perspective view of the air side of an interconnect, according to an alternative embodiment of the present disclosure, FIG. 14B is a side view of a portion of the interconnect of FIG. 14A, FIG. 14C is a perspective view showing a foil seal disposed on the air side of the interconnect of FIG 14A, and FIG. 14D is a perspective view of the fuel side of the interconnect.

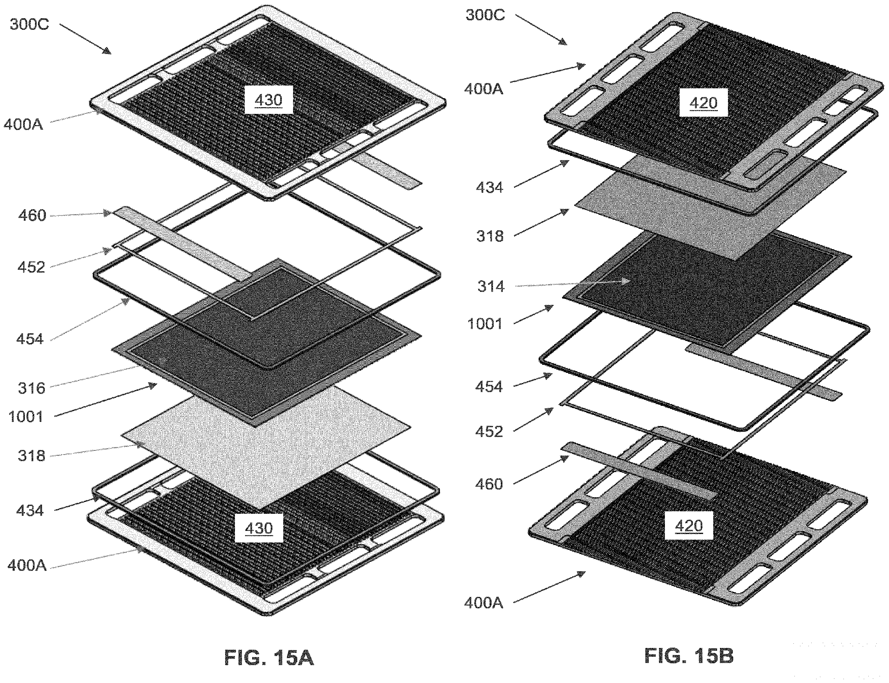

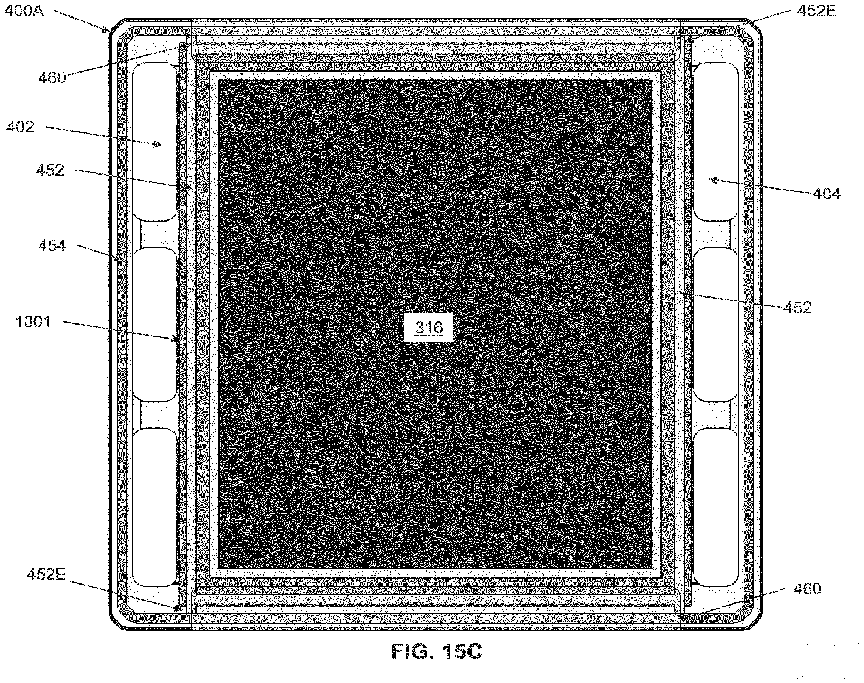

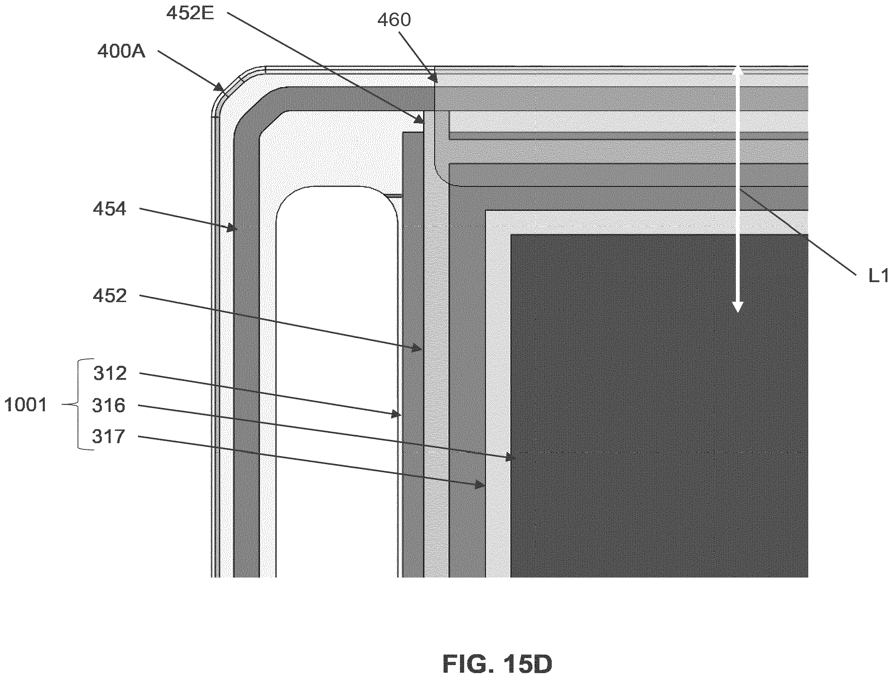

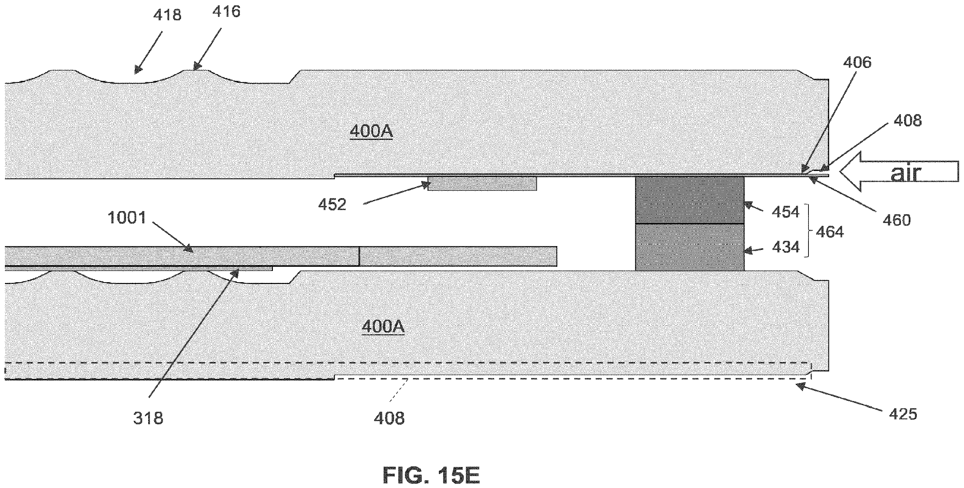

FIG. 15A is an exploded perspective view of an electrochemical cell stack showing the air side of the electrochemical cell, according to various embodiments of the present disclosure, FIG. 15B is an exploded perspective view of the electrochemical cell stack of FIG. 15A showing the fuel side of the electrochemical cell, FIG. 15C is a top view showing the overlap of seals and an electrochemical cell on the fuel side of an interconnect of FIG. 15A, FIG. 15D is an enlarged view of a corner of region of FIG. 15C, and FIG. 15E is a cross-sectional view taken along line L1 of FIG. 15D, prior to sintering of the stack.
FIGS 16A-16C are top views of the air side of a counterflow interconnect and stack components disposed thereon, according to various embodiments of the present disclosure, and FIGS. 16D-16F are top views of the fuel side of the counterflow interconnect and stack components disposed thereon.

### DETAILED DESCRIPTION

The various embodiments will be described in detail with reference to the accompanying drawings. The drawings are not necessarily to scale, and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

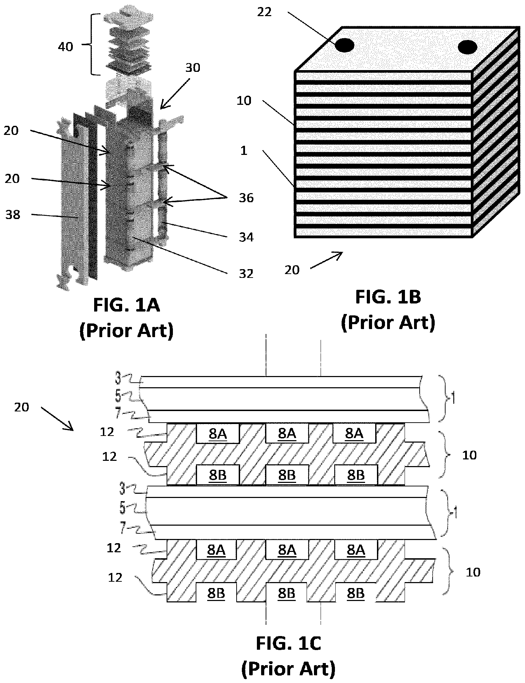

FIG. 1A is a perspective view of a prior art fuel cell column 30, FIG. 1B is a perspective view of one counter-flow solid oxide fuel cell (SOFC) stack 20 included in the column 30 of FIG. 1A, and FIG. 1C is a side cross-sectional view of a portion of the stack 20 of FIG. 1B.

Referring to FIGS. 1A and 1B, the column 30 may include one or more stacks 20, a fuel inlet conduit 32, an anode exhaust (fuel exhaust) conduit 34, and anode feed/return assemblies 36 (e.g., anode splitter plates (ASPs) 36). The column 30 may also include side baffles 38 and a compression assembly 40. The fuel inlet conduit 32 is fluidly connected to the ASPs 36 and is configured to provide the fuel feed to each ASP 36. Anode exhaust conduit 34 is fluidly connected to the ASPs 36 and is configured to receive anode fuel exhaust from each ASP 36.

The ASPs 36 are disposed between the stacks 20 and are configured to provide a hydrocarbon fuel containing fuel feed to the stacks 20 and to receive anode fuel exhaust from the stacks 20. For example, the ASPs 36 may be fluidly connected to internal fuel riser channels 22 formed in the stacks 20, as discussed below.

Referring to FIG. 1C, the stack 20 includes multiple fuel cells 1 that are separated by interconnects 10, which may also be referred to as gas flow separator plates or bipolar plates. Each fuel cell 1 includes a cathode electrode 3, a solid oxide electrolyte 5, and an anode electrode 7.

Each interconnect 10 electrically connects adjacent fuel cells 1 in the stack 20. In particular, an interconnect 10 may electrically connect the anode electrode 7 of one fuel cell 1 to the cathode electrode 3 of an adjacent fuel cell 1. FIG. 1C shows that the lower fuel cell 1 is located between two interconnects 10.

Each interconnect 10 includes ribs 12 that at least partially define fuel channels 8A and air channels 8B. The interconnect 10 may operate as a gas-fuel separator that separates a fuel, such as a hydrocarbon fuel, flowing to the fuel electrode (i.e., anode 7) of one cell in the stack from oxidant, such as air, flowing to the air electrode (i.e., cathode 3) of an adjacent cell in the stack. At either end of the stack 20, there may be an air end plate or fuel end plate (not shown) for providing air or fuel, respectively, to the end electrode.

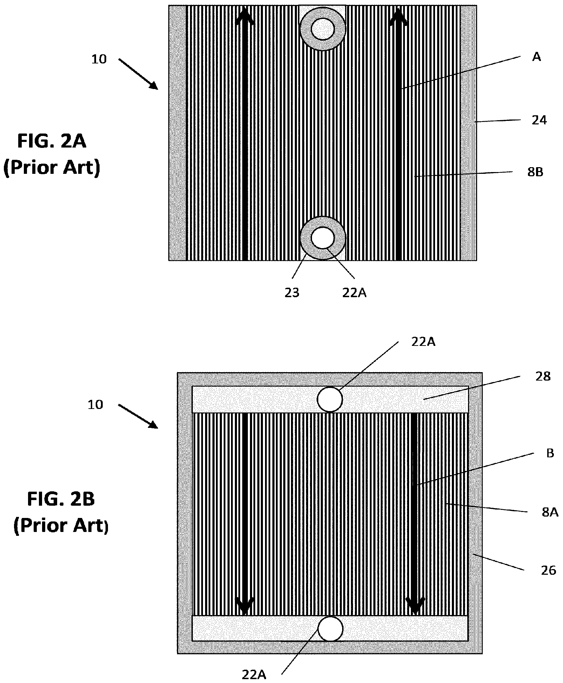

FIG. 2A is a top view of the air side of a prior art interconnect 10, and FIG. 2B is a top view of a fuel side of the prior art interconnect 10. Referring to FIGS. 1C and 2A, the air side of the interconnect 10 includes the air channels 8B. Air flows through the air channels 8B to a cathode electrode 3 of an adjacent fuel cell 1. In particular, the air may flow across the interconnect 10 in a first direction A as indicated by the arrows.

Ring seals 23 may surround fuel holes 22A of the interconnect 10, to prevent fuel from contacting the cathode electrode. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the ribs 12.

Referring to FIGS. 1C and 2B, the fuel side of the interconnect 10 may include the fuel channels 8A and fuel manifolds 28 (e.g., fuel plenums). Fuel flows from one of the fuel holes 22A, into the adjacent manifold 28, through the fuel channels 8A, and to an anode 7 of an adjacent fuel cell 1. Excess fuel and reaction products may flow into the other fuel manifold 28 and then into the adjacent fuel hole 22A. In particular, the fuel may flow across the interconnect 10 in a second direction B, as indicated by the arrows. The second direction B may be opposite from the first direction A (see FIG. 2A) to create a counter-flow embodiment.

A frame-shaped seal 26 is disposed on a peripheral region of the fuel side of the interconnect 10. The peripheral region may be an elevated plateau which does not include ribs or channels. The surface of the peripheral region may be coplanar with tops of the ribs 12.

Accordingly, a prior art counter-flow fuel cell column, as shown in FIGS 1A, 1B, 1C, 2A, and 2B, may include complex fuel distribution systems (fuel rails and anode splitter plates). In addition, the use of an internal fuel riser may require holes in fuel cells and corresponding seals, which may reduce the active area of the fuel cell and may cause cracks in the ceramic electrolytes of the fuel cells 1.

The fuel manifolds 28 may occupy a relatively large region of the interconnect 10, which may reduce the contact area between the interconnect 10 and an adjacent fuel cell by approximately 10%. The fuel manifolds 28 are also relatively deep, such that the fuel manifolds 28 represent relatively thin regions of the interconnect 10. Since the interconnect 10 is generally formed by a powder metallurgy compaction process, the density of fuel manifold regions may approach the theoretical density limit of the interconnect material. As such, the length of stroke of a compaction press used in the compaction process may be limited due to the high-density fuel manifold regions being incapable of being compacted further. As a result, the density achieved elsewhere in the interconnect 10 may be limited to a lower level by the limitation to the compaction stroke. The resultant density variation may lead to topographical variations, which may reduce the amount of contact between the interconnect 10 and fuel cell 1 and may result in lower stack yield and/or performance.

Another important consideration in fuel cell system design is operational efficiency. Maximizing fuel utilization is a key factor to achieving operational efficiency. Fuel utilization is the ratio of how much fuel is consumed during operation, relative to how much is delivered to a fuel cell. An important factor in preserving fuel cell cycle life may be avoiding fuel starvation in fuel cell active areas, by appropriately distributing fuel to the active areas. If there is a maldistribution of fuel such that some flow field channels receive insufficient fuel to support the electrochemical reaction that would occur in the region of that channel, it may result in fuel starvation in fuel cell areas adjacent that channel. To distribute fuel more uniformly, prior art interconnect designs include channel depth variations across the flow field. This may create complications not only in the manufacturing process but may also require complex metrology to measure these dimensions accurately.

One possible solution to eliminate this complicated geometry and the fuel manifold is to have a wider fuel opening to ensure much more uniform fuel distribution across the fuel flow field. Since fuel manifold formation is a factor in density variation, elimination of fuel manifolds should enable more uniform interconnect density and permeability. Accordingly, there is a need for improved interconnects that provide for uniform contact with fuel cells, while also uniformly distributing fuel to the fuel cells without the use of prior art fuel manifolds.

Owing to backwards compatibility restrictions in expanding the size of a hotbox of a fuel cell system, there is also a need for improved interconnects designed to maximize fuel utilization and fuel cell active area, without increasing the footprint of a hotbox.

### Crossflow Fuel Cell Systems

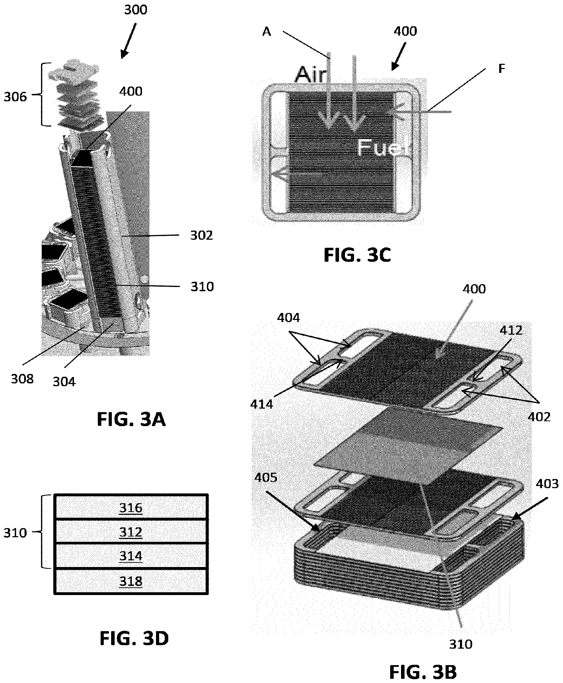

FIG. 3A is a perspective view of a fuel cell stack 300, according to various embodiments of the present disclosure, FIG. 3B is an exploded perspective view of a portion of the stack 300 of FIG. 3A, FIG. 3C is a top view of the fuel side of an interconnect 400 included in the stack 300, and FIG. 3D is a schematic view of a fuel cell included in the stack 300.

Referring to FIGS. 3A-3D, the fuel cell stack 300, which may also be referred to as a fuel cell column because it lacks ASPs, includes multiple fuel cells 310 that are separated by interconnects 400, which may also be referred to as gas flow separator plates or bipolar plates. One or more stacks 300 may be thermally integrated with other components of a fuel cell power generating system (e.g., one or more anode tail gas oxidizers, fuel reformers, fluid conduits and manifolds, etc.) in a common enclosure or "hotbox."

The interconnects 400 are made from an electrically conductive metal material. For example, the interconnects 400 may comprise a ferritic stainless steel or a chromium alloy, such as a Cr-Fe alloy. The interconnects 400, such as ferritic stainless steel interconnects, may be fabricated using any suitable process, such as 3D printing (e.g., binder jet 3D printing or laser powder bed fusion, etc.), metal machining methods (e.g., milling, electrical discharge machining (EDM), etc.), powder metallurgy methods, or sheet metal processing methods (e.g., sheet forming, bending, punching and/or stamping, etc.). The Cr-Fe interconnects 400 may typically be fabricated using a powder metallurgy technique that includes pressing and sintering a Cr-Fe powder, which may be a mixture of Cr and Fe powders or a Cr-Fe alloy powder, to form a Cr-Fe interconnect in a desired size and shape (e.g., a "net shape" or "near net shape" process). A typical chromium-alloy interconnect 400 comprises more than about 90% chromium by weight, such as about 94-96% (e.g., 95%) chromium by weight. An interconnect 400 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities.

Each fuel cell 310 may include a solid oxide electrolyte 312, an anode 314, and a cathode 316. In some embodiments, the anode 314 and the cathode 316 may be printed on the electrolyte 312. In other embodiments, a conductive layer 318, such as a nickel mesh, may be disposed between the anode 314 and an adjacent interconnect 400. The fuel cell 310 does not include through holes, such as the fuel holes of prior art fuel cells (e.g., fuel holes 22 in FIG. 1B). Therefore, the fuel cell 310 is less susceptible to cracks that may be generated due to the presence of such through holes.

An upper most interconnect 400 and a lowermost interconnect 400 of the stack 300 may be different ones of an air end plate or fuel end plate including features for providing air or fuel, respectively, to an adjacent end fuel cell 310. As used herein, an "interconnect" may refer to either an interconnect located between two fuel cells 310 or an end plate located at an end of the stack and directly adjacent to only one fuel cell 310. Since the stack 300 does not include ASPs and the end plates associated therewith, the stack 300 may include only two end plates. As a result, stack dimensional variations associated with the use of intra-column ASPs may be avoided.

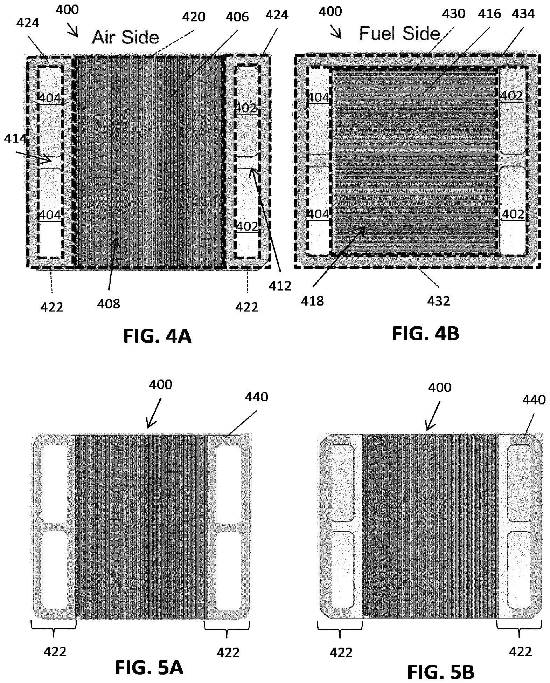

The stack 300 may include side baffles 302, a fuel plenum 304, and a compression assembly 306. The side baffles 302 may be formed of a ceramic material and may be disposed on opposing sides of the fuel cell stack 300 containing stacked fuel cells 310 and interconnects 400. The side baffles 302 may connect the fuel plenum 304 and the compression assembly 306, such that the compression assembly 306 may apply pressure to the stack or column 300. The side baffles 302 may be curved baffle plates, such that each baffle plate covers at least portions of three sides of the fuel cell stack 300. For example, one baffle plate may fully cover the fuel inlet riser side of the stack 300 and partially covers the adjacent front and back sides of the stack, while the other baffle plate fully covers the fuel outlet riser side of the stack and partially covers the adjacent portions of the front and back sides of the stack. The remaining uncovered portions for the front and back sides of the stack allow air to flow through the stack 300. The curved baffle plates provide an improved air flow control through the stack compared to the prior art baffle plates 38 which cover only one side of the stack. Accordingly, the side baffles may more efficiently control air flow through air channels of the interconnects which are exposed between the side baffles 302 and are described in detail with regard to FIGS. 4A and 4B The fuel plenum 304 may be disposed below the stack 300 and may be configured to provide a hydrogencontaining fuel feed to the stack 300, and may receive an anode fuel exhaust from the stack 300. The fuel plenum 304 may be connected to fuel inlet and outlet conduits 308 which are located below the fuel plenum 304.

Each interconnect 400 electrically connects adjacent fuel cells 310 in the stack 300. In particular, an interconnect 400 may electrically connect the anode electrode of one fuel cell 310 to the cathode electrode of an adjacent fuel cell 310. As shown in FIG. 3C, each interconnect 400 may be configured to channel air in a first direction A, such that air may be provided to the cathode of an adjacent fuel cell 310. Each interconnect 400 may also be configured to channel fuel in a second direction F, such that fuel may be provided to the anode of an adjacent fuel cell 310. Directions A and F may be perpendicular, or substantially perpendicular. As such, the interconnects 400 may be referred to as crossflow interconnects.

The interconnect 400 may include fuel holes that extend through the interconnect 400 and are configured for fuel distribution. For example, the fuel holes may include one or more fuel inlets 402 and one or more fuel outlets 404, which may also be referred to as anode exhaust outlets 404. The fuel inlets and outlets 402, 404 may be disposed outside of the perimeter of the fuel cells 310. As such, the fuel cells 310 may be formed without corresponding through holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions 412. In one embodiment, each interconnect 400 contains two fuel outlets 404 separated by a neck portion 414 of the interconnect 400, as shown in FIG. 3B. However, more than two fuel outlets 404 may be included, such as three to five outlets separated by two to four neck portions 414.

The fuel inlets 402 of adjacent interconnects 400 may be aligned in the stack 300 to form one or more fuel inlet risers 403. The fuel outlets 404 of adjacent interconnects 400 may be aligned in the stack 300 to form one or more fuel outlet risers 405. The fuel inlet riser 403 may be configured to distribute fuel received from the fuel plenum 304 to the fuel cells 310. The fuel outlet riser 405 may be configured to provide anode exhaust received from the fuel cells 310 to the fuel plenum 304.

In various embodiments, the stack 300 may include from about 200 to 400 fuel cells, such as about 250 to 350 fuel cells, more particularly from about 275 to 325 fuel cells, which may be provided with fuel using only the fuel risers 403, 405. As compared to a fuel cell system utilizing the prior art fuel cell stack of FIG. 1B, the crossflow configuration allows for a large number of fuel cells to be provided with fuel, without the need for ASPs or external stack fuel manifolds, such as external conduits 32, 34 shown in FIG. 1A.

Each interconnect 400 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 400 may comprise a metal (e.g., a chromium-iron alloy, such as 4-6 weight percent iron, optionally 1 or less weight percent yttrium (and other impurities) and balance chromium alloy), and may electrically connect the anode or fuel-side of one fuel cell 310 to the cathode or air-side of an adjacent fuel cell 310. An electrically conductive contact layer, such as a nickel contact layer (e.g., a nickel mesh), may be provided between the anode and each interconnect 400. Another optional electrically conductive contact layer may be provided between the cathode electrodes and each interconnect 400.

A surface of an interconnect 400 that in operation is exposed to an oxidizing environment (e.g., air), such as the cathode-facing side of the interconnect 400, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as lanthanum strontium manganite (LSM), may be formed using an atmospheric plasma spray (APS) process, a spray coating process or a dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

FIGS. 4A and 4B are plan views showing, respectively, an air side and a fuel side of the crossflow interconnect 400, according to various embodiments of the present disclosure. Referring to FIG. 4A, the air side of the interconnect 400 may include ribs 406 configured to at least partially define air channels 408 configured to provide air to the cathode of a fuel cell 310 disposed thereon. The air side of the interconnect 400 may be divided into an air flow field 420 including the air channels 408, and riser seal surfaces 422 disposed on two opposing sides of the air flow field 420. One of the riser seal surfaces 422 may surround the fuel inlets 402 and the other riser seal surface 422 may surround the fuel outlets 404. The air channels 408 and ribs 406 may extend completely across the air side of the interconnect 400, such that the air channels 408 and ribs 406 terminate at opposing first and second peripheral edges of the interconnect 400. In other words, when assembled into a stack 300, opposing ends of the air channels 408 and ribs 406 are disposed on opposing (e.g., front and back) outer surfaces of the stack, to allow air to flow through the stack. Therefore, the stack may be externally manifolded for air.

Riser seals 424 may be disposed on the riser seal surface 422. For example, one riser seal 424 may surround the fuel inlets 402, and one riser seal 424 may surround the fuel outlets 404. The riser seals 424 may prevent fuel and/or anode exhaust from entering the air flow field 420 and contacting the cathode of the fuel cell 310. The riser seals 424 may also operate to prevent fuel from leaking out of the fuel cell stack 300 (see FIG. 3A).

Referring to FIG. 4B, the fuel side of the interconnect 400 may include ribs 416 that at least partially define fuel channels 418 configured to provide fuel to the anode of a fuel cell 310 disposed thereon. The fuel side of the interconnect 400 may be divided into a fuel flow field 430 including the fuel channels 418, and a perimeter seal surface 432 surrounding the fuel flow field 430 and the fuel inlets and outlets 402, 404. The ribs 416 and fuel channels 418 may extend in a direction that is perpendicular or substantially perpendicular to the direction in which the air channels 408 and ribs 406 extend.

A frame-shaped perimeter seal 434 may be disposed on the perimeter seal surface 432. The perimeter seal 434 may be configured to prevent air from entering the fuel flow field 430 and contacting the anode of an adjacent fuel cell 310. The perimeter seal 434 may also operate to prevent fuel from exiting the fuel risers 403, 405 and leaking out of the fuel cell stack 300 (see FIGS. 3A and 3B). The seals 424, 434 may comprise a glass or ceramic seal material, as discussed in detail below. The seal material may have a low electrical conductivity. In some embodiments, the seals 424, 434 may be formed by printing one or more layers of seal material on the interconnect 400, followed by sintering.

FIG. 5A is a plan view showing the air side of the interconnect 400 without the riser seals 424, according to various embodiments of the present disclosure, and FIG. 5B is a plan view showing a modified version of FIG. 5A.

In prior art counter flow fuel cell system designs (e.g., FIG. 1B), the fuel cell electrolytes fully cover the interconnects, such that the fuel cell electrolytes operate as dielectric layers between adjacent interconnects. In a crossflow design, interconnects may extend past the perimeter of the fuel cells. This can potentially result in electrical shorting between interconnects, if the stack is tilted, or if seals become conductive over time.

Referring to FIGS. 5A and 5B, the interconnect 400 may optionally include dielectric layers 440 disposed on the riser seal surfaces 422. For example, as shown in FIG. 5A, each dielectric layer 440 may be annular and may cover all, or substantially all, of the corresponding riser seal surface 422. For example, in the embodiment of FIG. 5A, the dielectric layers 440 may be D-shaped and may have substantially the same shape as the riser seals 424 shown in FIG. 4A. In other embodiments, as shown in FIG. 5B, the dielectric layers 440 may be C-shaped and may cover only a portion of the corresponding riser seal surface 422, such as a portion adjacent to the outer perimeter of the interconnect 400. The dielectric layers 440 form an electrically insulating barrier between adjacent interconnects 400 and prevent electrical shorting if a stack containing the interconnect 400 is tilted or if a seal becomes conductive.

The dielectric layers 440 may comprise alumina, zircon (zirconium silicate), silicon carbide, crystalline glass (e.g., quartz or a glass-ceramic), or other high temperature dielectric materials. In some embodiments, the dielectric layers 440 may include a corrosion barrier material or layer. For example, the dielectric layers 440 may comprise a composite material comprising a corrosion-tolerant glass, alumina, zircon, or the like. For example, in some embodiments the dielectric layers 440 comprise a glass ceramic layer formed from a substantially glass barrier precursor layer containing at least 90 wt.% glass (e.g., 90-100 wt.% glass, such as around 99 to 100 wt.% amorphous glass and 0 to 1 wt.% crystalline phase) applied to a surface of interconnect 400. In one embodiment, the glass barrier precursor layer containing at least 90 wt.% glass comprises: 45-55 wt.% silica (SiO₂); 5-10 wt.% potassium oxide (K₂O); 2-5 wt.% calcium oxide (CaO); 2-5 wt.% barium oxide (BaO); 0-1 wt.% boron trioxide (B₂O₃); 15-25 wt.% alumina (Al₂O₃); and 20-30 wt.% zirconia (ZrO₂) on an oxide weight basis.

In some embodiments, the glass barrier precursor layer comprises least 90% glass (e.g., 90-100 wt.% glass, such as around 99 to 100 wt.% amorphous glass and 0 to 1 wt.% crystalline phase) by weight. For example, the glass barrier precursor layer may comprise, on an oxide weight basis: from about 30% to about 60%, such as from about 35% to about 55%, silica (SiO₂); from about 0.5% to about 15%, such as from about 1% to about 12%, boron trioxide (B₂O₃); from about 0.5% to about 5%, such as from about 1% to about 4%, alumina (Al₂O₃); from about 2% to about 30%, such as from about 5% to about 25%, calcium oxide (CaO); from about 2% to about 25%, such as from about 5% to about 20% magnesium oxide (MgO); from about 0% to about 35%, such as from about 20% to about 30%, barium oxide (BaO); from about 0% to about 20%, such as from about 10% to about 15%, strontium oxide (SrO); and from about 2% to about 12%, such as from about 5% to about 10%, lanthanum oxide (La₂O₃). In some embodiments, the glass barrier precursor material may include at least one of BaO and/or SrO in a non-zero amount such as at least 0.5 wt.%, such as both of BaO and SrO in a non-zero amount, such at least 0.5 wt.%.

In some embodiments, some or all of a LSM/MCO coating may be removed on the air side of the interconnect 400 in the area around the riser seal 424, to prevent Mn diffusion from the LSM/MCO material into the riser seal 424, and thereby prevent the riser seal 424 from becoming conductive. In other embodiments, the riser seals 424 may be formed of crystalline glass or glass-ceramic materials that do not react with the LSM/MCO coating, such as the borosilicate glass-ceramic compositions discussed above.

The dielectric layer 440 can be formed from freestanding layers, such as a tape cast and sintered layer, and may be disposed between interconnects 400 during fuel cell stack assembly. In other embodiments, the dielectric layers 440 may be formed by dispersing a dielectric material in an ink, paste, or slurry form, and subsequently screen printed, pad printed, or aerosol sprayed onto the interconnect 400. In some embodiments, the dielectric layer 440 may be formed by a thermal spraying process, such as an atmospheric plasma spray (APS) process. For example, the dielectric layer 440 may include alumina deposited by an APS process.

The dielectric layer 440 may be deposited directly on the interconnect 400. For example, the dielectric layer 440 may be disposed directly on the riser seal surfaces 422 (i.e., parts of the interconnect 400 around the fuel inlets and outlets 402, 404 in areas that will be covered by the riser seals 424 and that are not covered by the LSM/MCO coating, except for a small area of overlap (e.g., seam) where the dielectric layer 440 overlaps with a LSM/MCO coating where the riser seal surface 422 meets the air flow field 420, so as to prevent Cr evaporation from an exposed surface of the interconnect 400. Thus, the LSM/MCO coating is located on the interconnect 400 surface in the air flow field 420 containing air channels 408 and ribs 406, but not in the riser seal surface 422 of the interconnect 400 surrounding the fuel inlets and outlets 402, 404. The dielectric layer 440 is located on the riser seal surface of the interconnect 400 in the area surrounding the fuel inlets and outlets 402, 404 that is not covered by the LSM/MCO coating and on the edge of the LSM/MCO coating in the air flow field 420 adjacent to the riser seal surface 422. Alternatively, the dielectric layer 440 may be omitted and there is no dielectric layer 440 deposited around the fuel riser openings.

The fuel cell stack and/or components thereof may be conditioned and/or sintered. "Sintering" includes processes for heating, melting and/or reflowing glass or glass-ceramic seal precursor materials to form seals in a fuel cell stack, which may be performed at elevated temperature (e.g., 600-1000°C) in air and/or inert gas. "Conditioning" includes processes for reducing a metal oxide (e.g., nickel oxide) in an anode electrode to a metal (e.g., nickel) in a cermet electrode (e.g., nickel and a ceramic material, such as a stabilized zirconia or doped ceria) and/or heating the stack 300 during performance characterization/testing, and may be performed at elevated temperature (e.g., 750-900°C) while fuel flows through the stack. The sintering and conditioning of the fuel cell stack 300 may be performed during the same thermal cycle (i.e., without cooling the stack to room temperature between sintering and conditioning).

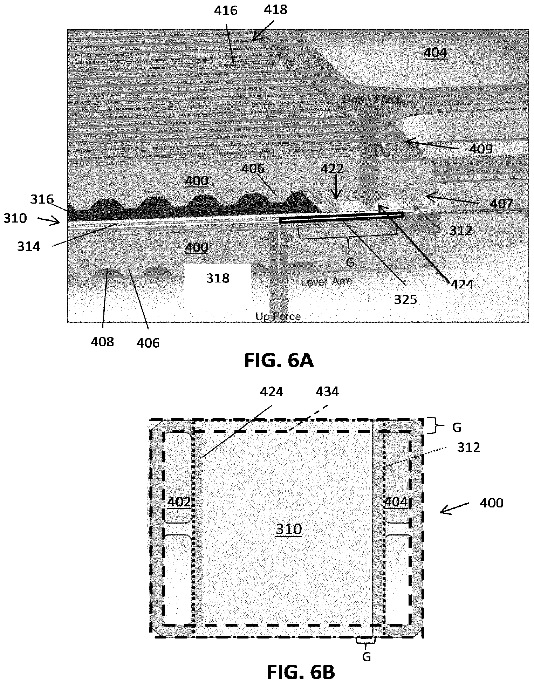

FIG. 6A is a sectional perspective view of two interconnects 400 of FIGS. 4A and 4B, and a fuel cell 310 as assembled in the fuel cell stack 300 of FIG. 3A, according to various embodiments of the present disclosure. FIG. 6B is a top view showing the overlap of the fuel cell 310, and seals 424, 434, on the interconnect 400 of FIG. 6A.

Referring to FIGS. 4A, 4B, 6A, and 6B, when assembled in a fuel cell stack, a fuel cell 310 is disposed between two interconnects 400, so as to face the air flow field 420 of a first interconnect and the fuel flow field 430 of a second interconnect 400. The riser seals 424 may contact first opposing sides of the air side of the fuel cell 310, and the perimeter seal 434 may contact second opposing sides of the fuel side of the fuel cell 310. As such, portions of the seals 424, 434 may be thicker outside of the perimeter of the fuel cell 310 than inside of the perimeter of (e.g., overlapping with) the fuel cell 310. Portions of the perimeter seal 434 adjacent the fuel inlets and outlets 402, 404 may overlap with corresponding portions of the riser seals 424. In addition, portions of the fuel cell 310 may be disposed between overlapping portions of the seals 424, 434, such as at corners of the fuel cell 310. As such, a combined thickness of the overlapped portions of the fuel cell 310 and seals 424, 434 may be greater than a thickness of the overlapped portions of the seals 424, 434.

In order to account for this thickness variation and/or properly seal the fuel cell stack, the thickness of portions of the interconnects 400 that are disposed outside of the perimeter of the fuel cell 310 may be increased by an amount equal to the after-sintering thickness of the fuel cell 310 (e.g., the after-sintering thickness of the electrodes 314, 316, electrolyte 312, and nickel mesh 318 as shown in FIG. 3D).

Since the seals 424, 434 overlap the corners of the fuel cell 310, a gap G may be formed between the corners, below each of the riser seals 424 (e.g., below the electrolyte 312). When the stack 300 is compressed, a down force may be transmitted through the interconnect 400 and riser seals 424, and into the unsupported edges of the fuel cell 310 adjacent the gaps G, which may create a leaver arm effect, due to the adjacent gaps G below the riser seals 424.

The electrodes and conductive layer of a fuel cell are only disposed on an active region of the fuel cell (e.g., where the fuel cell is exposed to fuel and air). In other words, seals may be disposed on portions of the electrolyte that are not covered with the electrodes and/or conductive layer.

According to various embodiments of the present disclosure, in order to support the edges of the fuel cell 310, the conductive layer 318 (e.g., nickel mesh) may be extended into the gaps G. In some embodiments, the anode 314 and/or cathode 316 may also be extended to cover the electrolyte below the riser seals 424, in combination with extending the conductive layer 318 into the gaps G. In other embodiments, one or more electrolyte reinforcement layers 325 may be formed on one or both sides of the electrolyte 312 below the riser seals 424, and may be formed of a ceramic material, such as alumina and/or zirconia. The electrolyte reinforcement layer 325 may have substantially the same thickness as the anode 314 and/or cathode 316, and may further support the edge of the fuel cell 310 in conjunction with the conductive layer 318. In some embodiments, the electrolyte reinforcement layer 325 may be disposed on the cathode-side of the fuel cell 310 and may be formed of a chromium getter material, such as manganese cobalt oxide spinel. As such, the electrolyte reinforcement layer 325 may be configured to remove chromium from air supplied to the fuel cell 310.

During high-temperature operations, if too much pressure is applied to the riser seals 424, the riser seals 424 may be forced out of the riser seal surfaces 422, past the edges of the fuel cell 310, and into the fuel inlets 402, the fuel outlets 404, and/or the fuel channels 418 of an adjacent interconnect 400. In severe cases, this can increase the pressure drop of fuel flow, cause fuel maldistribution from cell to cell, or even render the stack 300 unusable.

Accordingly, in some embodiments, the riser seal surfaces 422 may be recessed with respect to the tops of the air-side ribs 406. In other words, when the air side of the interconnect 400 is viewed from above, the riser seal regions may be lower than the tips of the ribs 406. For example, the riser seal surfaces 422 may be recessed by from about 30 to about 50 µm with respect to a plane extending across the tips of the ribs 406. Accordingly, when the fuel cell 310, which may have a thickness ranging from about 20-30 µm, for example, is brought into contact with the air side of the interconnect 400, the ribs 406 contact the fuel cell 310, and a space or recess may be formed between the fuel cell 310 and each of the riser seal surfaces 422.

When the fuel cell stack 300 is assembled, the recessed riser seal surfaces 422 provide additional space to accommodate the riser seals 424. As a result, the force applied to the riser seals 424 may be reduced, such that the riser seals 424 may remain in the riser seal surfaces 422 during high temperature operations such as sintering.

In some embodiments, one or more components of the fuel cell 310 may be made thicker, such as by contact printing to form thicker contact printed fuel cell layers. This increased thickness may also reduce the force applied to the riser seals 424. In some embodiments, a thicker fuel cell 310 may be used in conjunction with the recessed riser seal surface 422.

In various embodiments, a chamfer 407 may be added to the fuel inlets 402 and/or the fuel outlets 404 on the air side of the interconnect 400. The chamfer 407 may operate to capture seal material that has escaped from the riser seal surface 422. Chamfers 409 may also be added to other edges of the interconnect 400, such as edges of the inlets and outlets 402, 404 on the fuel side of the interconnect 400 and/or perimeter edges of the interconnect 400, for example. The chamfers may provide benefits during formation of the interconnect 400, such as preventing chipping during powdered metallurgy operations used to form the interconnect 400.

According to various embodiments, the seals 424, 434 may be formed of glass ceramic materials that are stable at high temperatures, act as a bonding agent between the interconnects 400 and the fuel cells 310 in the stack 300, and provide hermeticity (so as to achieve high fuel utilization and little or no fuel leakage). The seals are 424, 434 are also preferably chemically stable over long term at elevated stack operating temperatures, and inert to the electrolyte 312, interconnects 400 and the gases used in the stack 300, such as fuel and air. Finally, the seals 424, 434 should also be electrically insulating and have a dielectric integrity to prevent parasitic (short-circuit) current.

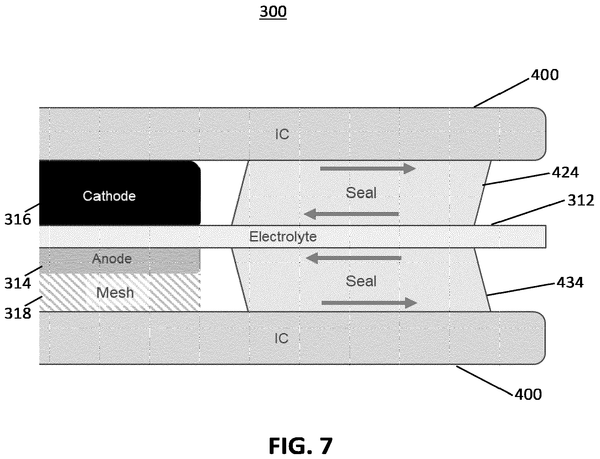

It should be noted that additional contact layers may be present between the interconnects 400 and the fuel cell 310 electrodes. For example, an anode contact layer 318, such as a nickel mesh, may be present between the anode 314 and the adjacent interconnect 400 in the stack 300, as shown in FIG. 7.

In one embodiment shown in FIG. 7, stresses arising from thermal gradients in the stack 300 are compensated by the seals to provide a certain amount of "compliance". As used herein, "compliance" means a sufficiently low viscosity such that under stress such as shear stress, the seals 424, 434 can plastically deform to relieve stress without fracturing, delaminating, or cracking the fuel cells 310 in the stack 300. This compliance is more important for large format (i.e., large length and width) stacks, where significant thermal gradients cause stresses.

For example, for interconnects 400 and fuel cells 310 having respective widths and lengths of 100 mm or greater, such as 100 to 200 mm, typical thermal gradients of more than 80 °C may arise from corner to corner across a single fuel cell 310. Such thermal gradients result in large inherent stresses on the fuel cell 310. Furthermore, the amount of stress increases further if the coefficients of thermal expansion between the fuel cell 310 and the interconnect 400 are mismatched by 1 to 5 percent, such as by 2 to 3 percent. For example, the coefficient of thermal expansion (CTE) of the interconnect 400 may be 1 to 5 percent, such as 2 to 3 percent higher than the CTE of the fuel cell 310. Such CTE mismatch may prevent or reduce fuel cell buckling (i.e., in-plane compression) during thermal or current cycles. However, if the fuel cell and interconnect CTEs are intentionally mismatched, then the above-described stresses increase by more than 100% over the case where the fuel cell and interconnect CTEs are equal to each other. Furthermore, the mismatched CTE puts the seals in shear (i.e., lateral shear stress as shown by the horizontal arrows in FIG. 7), in addition to the seals 424, 434 transmitting the vertically directed stress from the interconnects 400 to the fuel cells 310.

In one embodiment, if the seal material composition is made to be more compliant, then it can deform under shear. Such deformation will relieve the shear component of stress from the mismatch in CTE between the fuel cell 310 and the interconnect 400. Thus, the seal material of the seals 424, 434 should have a relatively low viscosity at SOFC operating temperatures between 700 and 900 °C, while maintaining chemical stability, compatibility with existing materials, dielectric integrity, wettability and self-healing. The relatively low viscosity enables the seals to plastically deform, relieving stresses on the fuel cell 310. In one embodiment, the seal material may have a viscosity (i.e., the value of log h) below 7.5 dPa*s, such as 5.75 to 7 dPa*s at 850 °C.

The table below provides the seal material composition, which includes, by weight, on an oxide basis:
40-60%, such as 45-55%, for example about 50% of SiO₂;
25-28%, such as 25.5-27%, for example about 26% of BaO;
10-20%, such as 11-15%, for example about 13% of B₂O₃;
8-12%, such as 9-11%, for example about 10% of Al₂O₃;
0-2 %, such as 0.1-1%, for example about 0.5% of ZrO₂;
0-1%, such as 0.1-0.75%, for example about 0.5% of Y₂O₃;
0-1%, such as 0.1-0.75%, for example about 0.1% of CaO; and
0-1%, such as 0.1-0.75%, for example about 0.5% of MgO.

The seal material composition may contain no other oxides or less than 0.1 weight percent of other oxides, such as sodium, potassium, lanthanum or phosphorus oxides. Alternatively, the seal material composition may include additional components, such as greater than 0.1 weight percent of other oxides.

In one embodiment, the seal material comprises a glass ceramic material after sintering glass powder in the stack 300 to partially crystallize the glass powder to form the seals 424, 434. Although not conclusive, it is believed that after sintering, the glass ceramic material includes a boron oxide and silica containing amorphous glass matrix phase, and one or more crystalline phases embedded in the matrix. The crystalline phases may include a cristobalite phase (e.g., a crystalline silica phase) and a barium silicate phase. These may be the only crystalline phases or there may be additional crystalline phases.

The compliant glass ceramic seal material may be formed by mixing the oxide powders described above in the according to the suggested weight ratios, melting the mixed powders, solidifying the melt and pulverizing the solidified melt to form the powder of the above the seal material.

Alternatively, the compliant glass ceramic seal material may be formed by mixing a commercially available glass sealing material powder having a relatively low barium content (e.g., a barium oxide content below 25 weight percent on an oxide basis) with either barium oxide powder or with another commercially available glass powder that has a higher barium oxide content (e.g., a barium oxide content of at least weight percent on an oxide basis). For example, a glass powder having a relatively low barium content may be mixed with one or more other powders having a higher barium content to form a mixed powder composition. The mixed powder composition may be provided into a suspension or dispersion (e.g., an ink) after mixing the powders, or the powders may be mixed in a solvent to form the ink in one step. The mixed powder composition (e.g., the ink) is then coated between the interconnects 400 and the fuel cells 310 in the stack 300. The mixed powder composition is then sintered in the stack 300 as described above to form the compliant glass ceramic seals 424, 434 illustrated in FIG. 7.

In one embodiment, the powder having the higher barium content may comprise a barium oxide powder, a commercially available glass powder which contains at least 45 weight percent on an oxide basis of barium oxide, or a crystallizing glass solder powder containing in weight percent, on an oxide basis, 45% to 60% of BaO, 25% to 40% of SiO₂, 5% to 15% of B₂O₃, 0 to <2% of Al₂O₃, 2% to 15% of MgO and 3% to 15% of Y₂O₃, as described in U.S. Patent Number 8,664,134 B2 ("the '134 patent"), issued on March 4, 2014 and incorporated herein by reference in its entirety. For example, 2.5 to 15 weight percent, such as 2.5 to 10 weight percent, for example 2.5 to 7.5 weight percent Schott G018-354 glass powder or the crystallizing glass solder powder of the ` 134 patent may be mixed with 85 to 97.5 weight percent, such as 90 to 97.5 weight percent, for example 92.5 to 97.5 weight percent Schott G018-281 glass powder to form the mixed powder composition used to form the compliant glass ceramic seal material in the stack.

In one embodiment, the barium content of the embodiment seal material is increased compared to commercially available glass fuel cell sealing material, such as Schott G018-281 sealing material. The barium content may be 4-8% by weight, such as about 5-7% by weight, of the total seal material composition. The increased barium content improves the compliance of the seal material. However, if the barium content is too high, then barium may react with the chromium in the Cr-Fe alloy interconnect and/or the seal may become too fluid and lose structural integrity. Although not conclusively established, it is believed that barium and/or barium oxide act as a flux to decrease the glass transition temperature of the seal material.

It is believed that mixing the lower and higher barium content powders and then sintering the mixed powders in the stack unexpectedly results in a glass ceramic seals 424, 434 that react less with chromium in the Cr-Fe alloy interconnect 400 than glass ceramic materials having the same composition, but which are formed from a melted glass frit. Specifically, it is believed that mixing the Schott G018-281 glass powder having a relatively low barium content with the higher barium content Schott G018-354 glass powder or the crystallizing glass solder powder of the '134 patent to form the mixed powder composition, coating the stack 300 components with the mixed powder composition (e.g., the ink), and then sintering the mixed powder composition in the stack 300 unexpectedly results in embodiment glass ceramic seals 424, 434 that have a relatively high compliance and a relatively low reactivity with chromium in the Cr-Fe alloy interconnect 400. In contrast, it is believed that if the Schott G018-281 glass powder is melted together with the Schott G018-354 glass powder, which is then solidified into a solid solution and pulverized into a powder, which is provided into an ink to form a frit which is coated into a stack and then sintered in the stack, then the resulting seals have a lower compliance and higher reactivity with the chromium in the Cr-Fe alloy interconnect 400 than the embodiment glass ceramic seals 424, 434 formed by mixing the powders.

The compliant glass ceramic seal material may be used to form seals 424, 434 in large format stacks to prevent or reduce thermally induced stress cracks in the fuel cells (e.g., SOFCs) 310. The increased compliance of the seals solves long term reliability issues, such as stress cracks in the fuel cells that develop over time. The compliant seal material may also provide faster current ramping and/or thermal cycling of the stack 300, speeding up deployment and reducing downtime of the stack 300, and may also provide the ability to follow current in real time (i.e., load following).

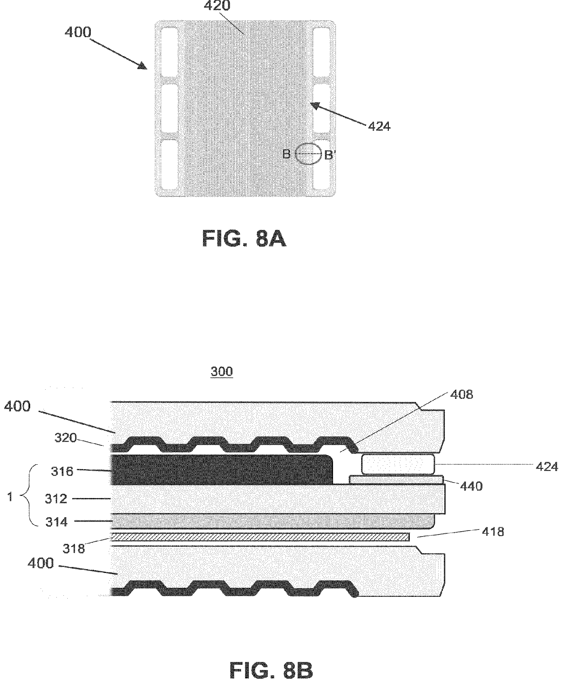

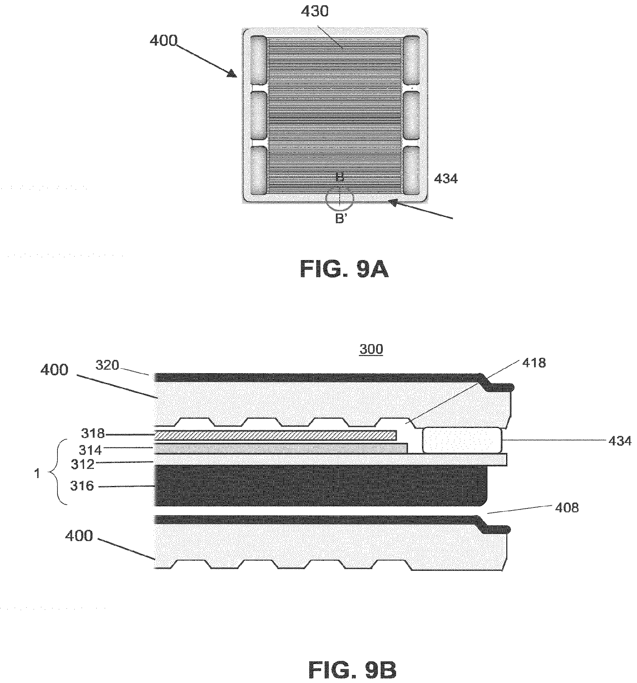

FIG. 8A is a top view of an air side of an interconnect 400. FIG. 8B is a side cross-sectional view along line B - B' in FIG. 8A of a portion of a fuel cell stack 300 containing the interconnect 400 and an electrolyte 312 supported cell 1 including the riser seal 424. FIG. 9A is a top view of a fuel side of the interconnect 400 of FIG. 8A. FIG. 9B is a side cross-sectional view along line B - B' in FIG. 9A of a portion of the fuel cell stack 300 of FIG. 8B containing the interconnect 400 and the electrolyte 312 supported cell 1 including the perimeter seal 434.

In the electrolyte supported cell 1 shown in FIG. 8B, the riser seal 424 is disposed over the electrolyte 312 with a dielectric layer 440 situated in between. The cathode 316 may be shorter than the electrolyte 312 along the direction of the fuel channels 418. Thus, the electrolyte 312 may contact the dielectric layer 440 under the riser seal 424 outside the air flow field 420. In the electrolyte supported cell 1, the electrolyte 312 is fully dense (i.e., non-porous) and impermeable to gas flow (other than oxygen ion diffusion during operation of the cell 1). An optional metal oxide coating 320 may be provided on the air side of the interconnect 400 in the air flow field 420. The metal oxide coating 320 may comprise a lanthanum strontium manganate coating, a manganese cobalt oxide spinel coating, a mixture thereof or a bilayer thereof. In one embodiment, the metal oxide coating 320 may be omitted outside the air flow field 420 such that the riser seal 424 directly contacts the air side of the interconnect 400 outside the air flow field 420. Thus, the riser seal 424 forms a hermetically sealed wall with the dielectric layer 440, the interconnect 400 and the electrolyte 312 which prevents air from the air channels 408 from leaking through the hermetically sealed wall.

Likewise, in the electrolyte supported cell 1 shown in FIG. 9B, the perimeter seal 424 is disposed on the electrolyte 312. The anode 314 may be shorter than the electrolyte 312 along the direction of the air channels 408. Thus, the electrolyte 312 may contact the perimeter seal 434 outside the fuel flow field 430. Furthermore, the perimeter seal 434 directly contacts the fuel side of the interconnect 400 outside the fuel flow field 430. Thus, the perimeter seal 434 forms a hermetically sealed wall with the interconnect 400 and the electrolyte 312 which prevents fuel from the fuel channels 418 from leaking through the hermetically sealed wall.

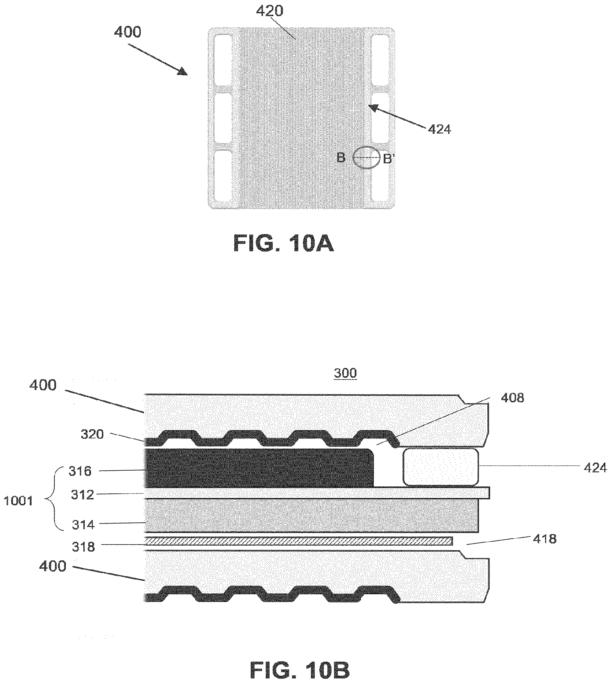

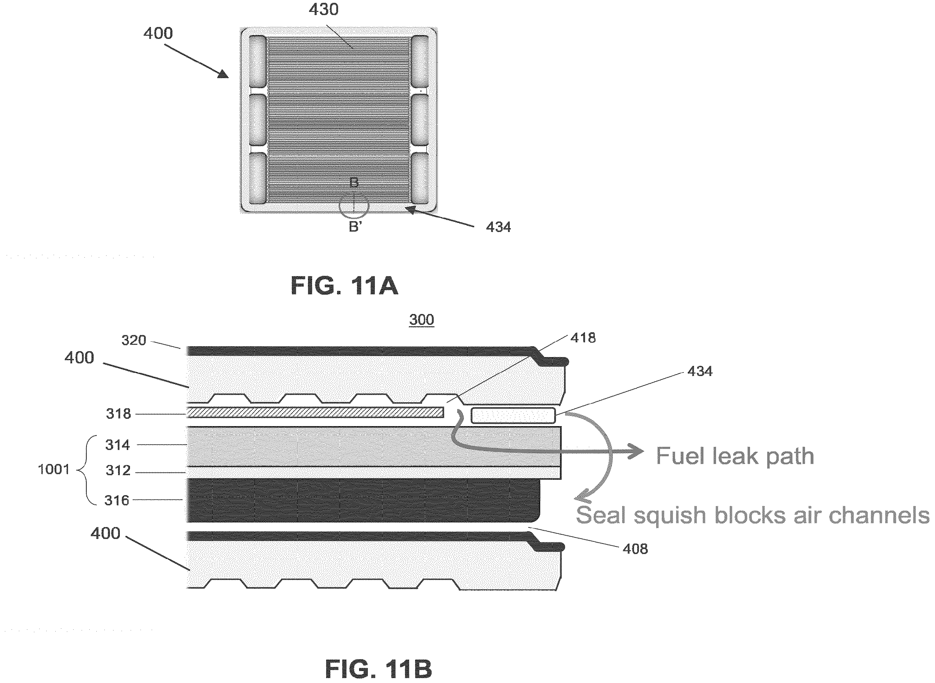

FIG. 10A is a top view of an air side of an interconnect 400. FIG. 10B is a side cross-sectional view along line B - B' in FIG. 10A of a portion of a fuel cell stack 300 containing the interconnect 400 and an anode 314 supported cell 1001 including the riser seal 424. FIG. 11A is a top view of a fuel side of the interconnect 400 of FIG. 10A. FIG. 11B is a side cross-sectional view along line B - B' in FIG. 11A of a portion of the fuel cell stack 300 of FIG. 10B containing the interconnect 400 and the anode 314 supported cell 1001 including the perimeter seal 434.

In the anode supported cell 1001, the electrolyte 312 and the cathode 316 are supported by a porous anode 314. The porous anode 314 is permeable to fuel flow. The anode 314 is typically thicker than the electrolyte 312 in the anode supported cell 1001 in order to mechanically support the electrolyte 312 and the cathode 316.

As shown in FIG. 10B, the cathode 316 of the anode supported cell 1001 may be shorter than the electrolyte 312 along the direction of the fuel channels 418. Thus, the fully dense electrolyte 312 may contact the riser seal 424 outside the air flow field 420. The riser seal 424 forms a hermetically sealed wall with the interconnect 400 and the fully dense electrolyte 312 which prevents air from the air channels 408 from leaking through the hermetically sealed wall.

However, a hermetically sealed region is not formed by the perimeter seal 434 of the anode supported cell 1001 of the comparative embodiment, as shown in FIG. 11B. In the anode supported cell 1001, the porous anode 314 typically cannot be made much shorter than the electrolyte 312 because the anode supports the electrolyte 312. Therefore, the perimeter seal 434 is formed on the porous anode 314 outside the fuel flow field 430 instead of on the fully dense electrolyte 312. This provides an undesirable fuel leak path from the fuel channels 418 through the porous anode 314 outside the fuel cell stack 300, as shown in FIG. 11B. Furthermore, the porous anode 314 dimensions may cause the perimeter seal 434 to be squished laterally along the side surface of the fuel cell stack 300 during the assembly of the fuel cell stack 300. The squished out perimeter seal 434 material may block the entrance to the air channels 408 located in a side surface of the fuel cell stack 300.

Several embodiments provide solutions for blocking the fuel leak path and the perimeter seal squishing problems described above.

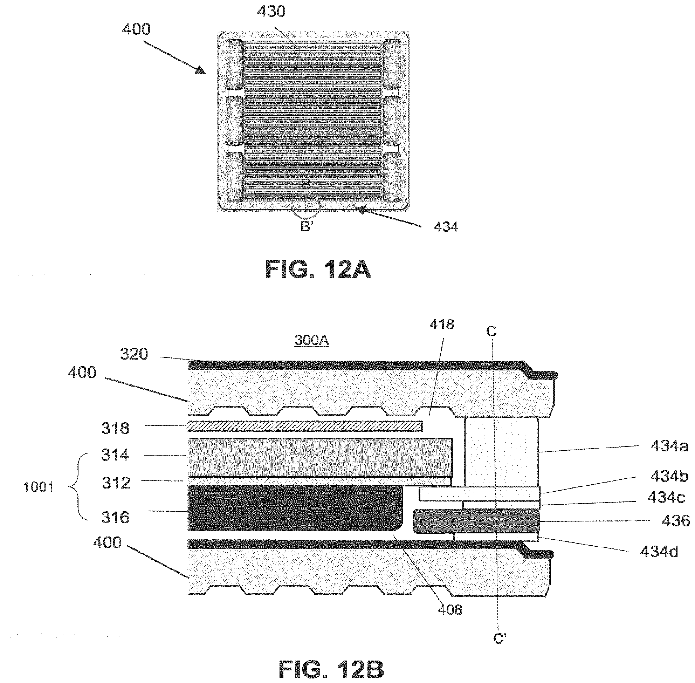

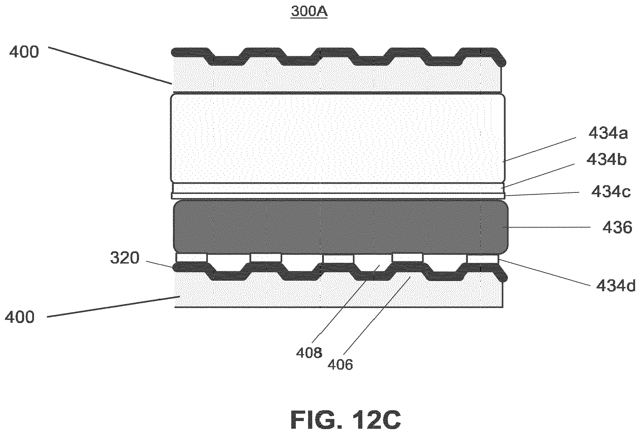

FIG. 12A is a top view of a fuel side of the interconnect 400 of one embodiment of the present disclosure. FIG. 12B is a side cross-sectional view along line B - B' in FIG. 12A of a portion of the fuel cell stack 300A containing the interconnect 400 and the anode 314 supported cell 1001 including the perimeter seal 434 of one embodiment of the present disclosure. FIG. 12C is a side cross-sectional view along line C - C' in FIG. 12B of a portion of the fuel cell stack 300A containing the interconnect 400 and the anode 314 supported cell 1001 including the perimeter seal 434 of one embodiment of the present disclosure.

In the embodiment of FIGS. 12A - 12C, the anode supported cell 1001 is recessed from the edge of interconnect 400 and from the perimeter seal 434 landing area on the interconnect 400. In one embodiment, the anode supported cell 1001 may be located only over the fuel flow field 430 and does not extend outside the fuel flow field 430 in the fuel cell stack 300A. In another embodiment, the anode supported cell 1001 extends partially outside the fuel flow field 430, but not to the end of interconnects 400 in the fuel cell stack 300A. For example, the anode supported cell 1001 may be recessed by 3 to 10 mm, such as 5 to 7 mm from the edge of the interconnect 400.

In this embodiment, a fuel impermeable, non-porous foil 436 and the perimeter seal 434 are disposed between adjacent interconnects 400 in the fuel cell stack 300A. The foil 436 and the perimeter seal 434 form a fuel impermeable, hermetically sealed wall to prevent fuel from flowing out of the fuel channels 418 outside the fuel cell stack 300A. The anode supported cell 1001 is laterally offset along the air channel 408 direction from the foil 436 and the perimeter seal 434.

In some embodiments, the foil 436 may be a metal or metal alloy, such as a ferritic stainless steel or a chromium iron alloy, which has a coefficient of thermal expansion (CTE) that differs from the CTE of the fuel cell 1001 by 10% or less, such as by 0 to 10%, including by 1 to 5%. The stainless steel may comprise SS446 stainless steel, which includes 23 to 27 wt.% Cr, 0.1 to 0.2 wt.% C, 1 to 1.5 wt.% Mn, 0.5 to 1 wt.% Si, trace amounts of N, P and S and balance iron (e.g., 72 to 74 wt.%). The chromium iron alloy may be the same as the alloy used to form the interconnects 400. For example, the chromium iron alloy may include 4 to 6 wt.% Fe and balance Cr. The foil 436 may be rigid or semi-rigid.

The perimeter seal 434 may be formed from several sublayers. The perimeter seal 434 may include a first screen-printed seal 434a, and a tape cast seal 434b. Optionally, the perimeter seal 434 may also include a second screen-printed seal 434c located between the foil 436 and the tape cast seal 434b, and a third screen-printed seal 434d located between the foil 436 and the air side ribs 406 of the adjacent interconnect 400, as shown in FIG. 12C. The air channels 408 are exposed to the outside of the fuel cell stack 300A below the foil 436 and the third screen-printed seal 434d.

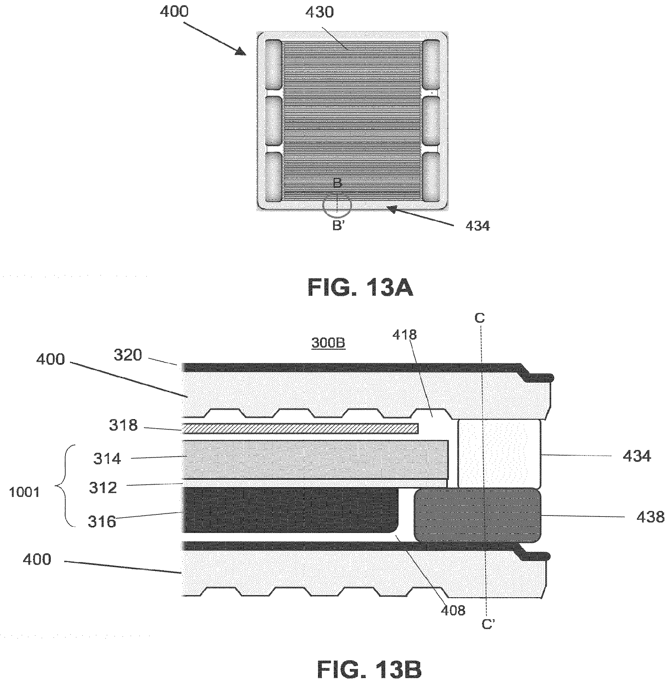

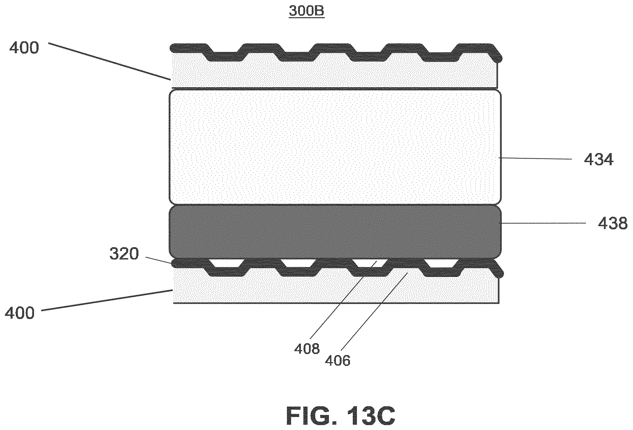

FIG. 13A is a top view of a fuel side of the interconnect 400 of an alternative embodiment of the present disclosure. FIG. 13B is a side cross-sectional view along line B - B' in FIG. 13A of a portion of the fuel cell stack 300B containing the interconnect 400 and the anode 314 supported cell 1001 including the perimeter seal 434 of the alternative embodiment of the present disclosure. FIG. 13C is a side cross-sectional view along line C - C' in FIG. 13B of a portion of the fuel cell stack 300B containing the interconnect 400 and the anode 314 supported cell 1001 including the perimeter seal 434 of the alternative embodiment of the present disclosure.

The alternative embodiment of FIGS. 13A - 13C differs from the embodiment of FIGS. 12A - 12C in that the foil 436 is replaced with a flexible gasket 438. Furthermore, since the gasket 438 is flexible, the perimeter seal 434 in the alternative embodiment may have a single layer configuration and may be deposited entirely by screen-printing or tape casting.

In various embodiments, flexible gasket 438 may contact the air side of the adjacent interconnect 400 and the peripheral seal 434. In one embodiment, the gasket 438 may contact and seal against the cathode facing surface of the electrolyte 312. In this embodiment, the cathode 316 may be recessed from the edge of the electrolyte 312, while the anode 314 extends to the edge of the electrolyte 312.

In various embodiments, the flexible gasket 438 may be, for example, a metal silicate clay gasket. In one embodiment, the flexible gasket 438 may comprise Thermiculite 866^{®} available from Flextallic L.P. Thermiculite 866^{®} is a high temperature sealing material designed for SOFC applications. It is based upon the mineral vermiculite and contains no organic binder or any other organic component. Vermiculite is a natural sheet silicate mineral formed by hydrothermal modification of biotite and phlogopite mica. It retains all the thermal and chemical durability of mica and remains electrically insulating. Like mica, vermiculite occurs as plate morphology particles, consisting of thousands of individual platelets and having a thickness in a nanometer range, which are stacked together. These particles can be exfoliated to produce a dispersion of individual platelets which are separated from each other. These platelets are highly flexible and conform to the surfaces of other particles to bind them together. This binding action allows a sheet material to be manufactured without any organic binding agents being present. As such, Thermiculite^{®} 866 consists just of the chemically exfoliated vermiculite and a second filler material. The second filler material is talc, also known as steatite or soapstone. The second filler material is relatively soft. As such, the combination of the chemically exfoliated vermiculite with steatite results in a material that retains all the chemical and thermal durability usually associated with mica and meanwhile is very soft and conformable. The softness of the material and the platelet alignment allows the material to be compressible under very low load to produce a compacted material that offers a very tortuous and passage stopping path to any gas that is permeating through the material in the plane of the sheet or perpendicular to that plane. Accordingly, the material has sealing characteristics.

The following table shows certain thermal properties of Thermiculite^{®} 866. As shown in the table below, the specific heat capacity of Thermiculite^{®} 866 is 0.949 J/g/K for 0.5 mm thick platelet and 0.950 J/g/K for 0.7 mm thick platelet. The thermal conductivity of Thermiculite^{®} 866 is 0.19 W/m/K for the 0.7 mm thick platelet.

| The Specific Heat Capacity of Thermiculite^{®} 866 (J/g/K) | |
|---|---|
| 0.5mm | 0.949 |
| 0.7mm | 0.950 |

| The Thermal Conductivity of Thermiculite^{®} 866 Determined by ISO 8301 (DIN 52612 & ASTM C518) (W/m/K) | |
|---|---|
| 0.7mm | 0.19 |

According to the embodiments of FIGS. 12A - 12C and FIGS. 13A - 13C, a fuel cell stack 300A, 300B includes a first interconnect 400, a second interconnect 400, a fuel cell 1001 located between the first interconnect and the second interconnect, and a fuel impermeable, hermetically sealed wall 434, (436 or 438) contacting opposing surfaces of the first interconnect and the second interconnect. The fuel impermeable, hermetically sealed wall includes a stack of a glass or glass ceramic seal 434 and a gas impermeable layer 436 or 438. The fuel cell 1001 is laterally offset from ends of the first interconnect and the second interconnect.

In one embodiment, the fuel cell 1001 comprises a solid oxide fuel cell.

In the embodiment of FIGS. 12A - 12C, the gas impermeable layer comprises a foil 436. The foil 436 may comprise a metal alloy foil which has a coefficient of thermal expansion which is within 10% of the coefficient of thermal expansion of the fuel cell 1001. In one embodiment, the metal alloy foil comprises a stainless steel foil. In another embodiment, the metal alloy foil comprises a chromium iron alloy comprising 4 to 6 wt.% iron and balance chromium. In one embodiment, the metal alloy foil 436 is rigid and the glass or glass ceramic seal 434 comprises a tape cast portion 434b and a screen-printed portion 434a.

In the embodiment of FIGS. 13A - 13C, the gas impermeable layer comprises a flexible gasket 438. In one embodiment, the flexible gasket 438 comprises a metal silicate clay material. For example, the flexible gasket may comprise vermiculite and talc.

In one embodiment, the solid oxide fuel cell 1001 comprises an anode supported solid oxide fuel cell, which includes a solid oxide electrolyte 312, a cathode 316 located on a first side of the electrolyte, and an anode 314 located on a second side of the electrolyte, such that the anode 314 is thicker than the electrolyte 312. In the embodiment of FIGS. 12A - 12C, the solid oxide fuel cell 1001 does not contact the gas impermeable layer 434, 436. In the embodiment of FIGS. 13A - 13C, the solid oxide fuel cell 1001 may contact the gas impermeable layer 434, 438.

In one embodiment, the first interconnect 400 comprises a first crossflow interconnect comprising a first fuel flow field 430 comprising first fuel channels 418 separated by first fuel ribs 416 extending in a first direction, and a first air flow field 420 comprising first air channels 408 separated by first air ribs 406 extending in a second direction perpendicular to the first direction. The second interconnect 400 comprises a second crossflow interconnect comprising a second fuel flow field comprising second fuel channels separated by second fuel ribs extending in the first direction, and a second air flow field comprising second air channels separated by second air ribs extending in the second direction perpendicular to the first direction. The fuel cell 1001 is laterally offset from ends of the first interconnect and the second interconnect along the second direction.

The first interconnect 400 comprises at least one fuel riser opening 402 or 404 surrounded by a riser seal 424 on an air side of the first interconnect 400. The fuel impermeable, hermetically sealed wall 434, (436 or 438) contacts opposing surfaces of the first interconnect and the second interconnect outside the first fuel flow field 430 and outside the second fuel flow field, respectively. The glass or glass ceramic seal 434 comprises a perimeter seal which extends along a perimeter of the first and the second interconnects 400. The fuel impermeable, hermetically sealed wall 434, (436 or 438) prevents fuel from flowing out of the first and the second fuel channels 418 to outside of the fuel cell stack 300A, 300B, and the second air channels 408 are exposed to the outside of the fuel cell stack 300A, 300B below the fuel impermeable, hermetically sealed wall.

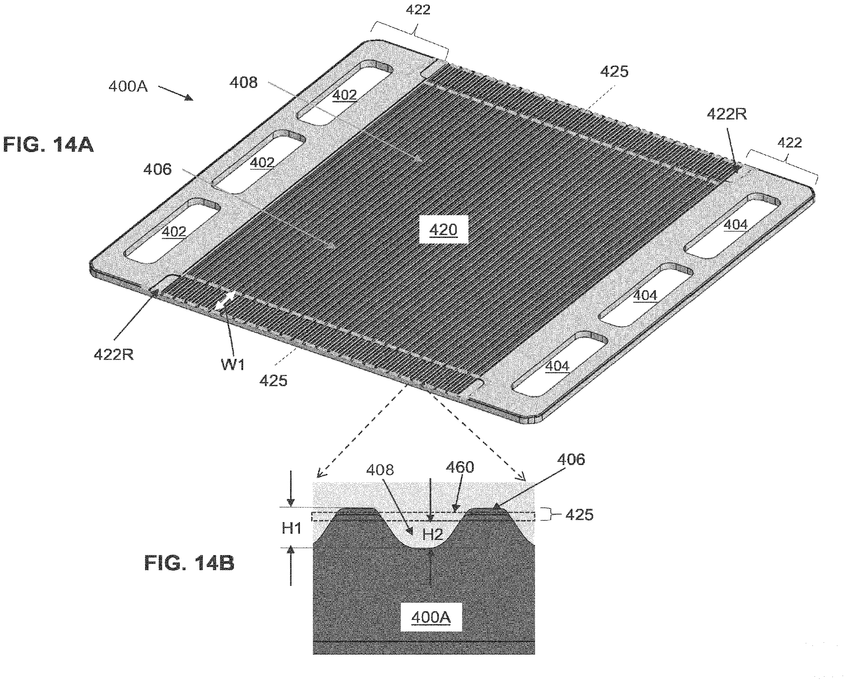

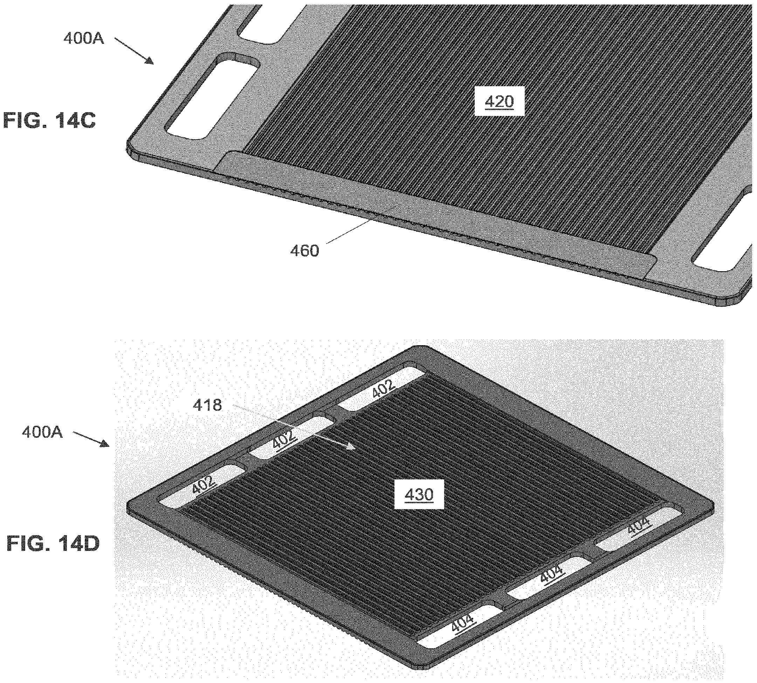

FIG. 14A is a perspective view of the air side of an interconnect 400A, according to an alternative embodiment of the present disclosure, FIG. 14B is a side view of a portion of the interconnect 400A of FIG. 14A, FIG. 14C is a perspective view showing a foil seal 460 disposed on the air side of the interconnect 400A, and FIG. 14D is a perspective view of the fuel side of the interconnect 400A. The interconnect 400A may be similar to the interconnect 400, as such, only the differences therebetween will be discussed in detail.

Referring to FIGS. 14A-14D, the interconnect 400A may have a crossflow configuration with air channels 408 and fuel channels 418 that extend in perpendicular directions. As such, fuel and air flow in perpendicular directions across the fuel and air sides of the interconnect 400A. The air side may include seal recesses 425 that extend between the riser seal surfaces 422 along opposing first and second peripheral edges of the interconnect 400A. The seal recesses 425 may have a width W1 ranging from about 5 mm to about 20 mm, such as from about 7 to about 15 mm. The seal recesses 425 may be formed by recessing (e.g., reducing the height of) end portions of the air side ribs 406 and recessed portions 422R of the riser seal surfaces 422 which are located adjacent to the air side ribs 406 in the seal recesses 425.

For example, a height H2 of the ribs 406 in the seal recesses 425 may be less than a height H1 of the ribs 406 outside of the seal recesses 425. In some embodiments, the difference between height H1 and height H2 (e.g., the depth of the seal recesses 425) may range from about 0.05 mm to about 0.3 mm, such as from about 0.07 mm to about 0.2 mm. The recessed portions 422R of the riser seal surfaces 422 disposed within the seal recesses 425 may be recessed with respect to a remainder of the riser seal surfaces 422, by an amount ranging from about 0.1 mm to about 0.3 mm, such as from about 0.15 mm to about 0.25 mm. In some embodiments, the tops of the ribs 406 outside of the seal recesses 425 may be recessed with respect to the riser seal surfaces 422 by about 0.05 to 0.2 mm.

Foil seals 460 may be disposed in the seal recesses 425, as shown in FIG. 14C. The foil seals 460 may differ from the foil 436 of the prior embodiments in that the foil seals 460 contact the tops of the air side ribs 406. Thus, the third screen-printed seal 434d located between the foil 436 and the air side ribs 406 may be omitted in this alternative embodiment. The foil seals 460 may be formed of strips of a metal or a metal alloy, such as a high-temperature stable stainless steel or a chromium-iron alloy. For example, one suitable stainless steel is a FeCrAlY alloy available from Engineered Materials Solutions under the trade name DuraFoil^{tm}. The FeCrAlY alloy may contain 19 to 22 wt.% Cr, 5 to 6 wt.% Al, and 0.05-0.15 wt.% Y, and balance Fe and unavoidable impurities. Optionally, the FeCrAlY alloy may additionally contain 0.03-0.1 wt.% Zr.

The foil seals 460 may have a width equal to the width W1 of the seal recesses 425. The foil seals 460 comprise flat strips which are supported by the tops of the air side ribs 406 in the seal recesses 425 without blocking the air channels 408 located between the air side ribs 406. The foil seals 460 may include a dielectric coating, such as a dielectric oxide layer, such that the foil seals 460 do not conduct current between their major surfaces and do not electrically connect adjacent interconnects 400A when assembled in a cell stack or column. In one embodiment, the FeCrAlY alloy foil seals 460 may be oxidized during a high temperature anneal in an oxidizing ambient to form the dielectric coating, such as an alumina coating on its surfaces. The foil seals 460 may have a thickness of about 100 µm or less, such as about 50 µm or less, such as a thickness ranging from about 25 µm to about 50 µm. The dielectric coating may have a thickness of 0.5 microns to 2 microns, such as 0.7 microns to 1 micron. The dielectric coating directly contacts the air side ribs 406 in the seal recess 425.

FIG. 15A is an exploded perspective view of an electrochemical cell stack 300C showing the air (e.g., cathode) side of the electrochemical cell 1001, according to various embodiments of the present disclosure, FIG. 15B is an exploded perspective view of the cell stack 300C of FIG. 15A showing the fuel (e.g., anode) side of the electrochemical cell 1001, FIG. 15C is a top view showing the overlap of seals and an electrochemical cell 1001 placed on the fuel side of an interconnect 400A of FIG. 15A, FIG. 15D is an enlarged view of a corner of region of FIG. 15C, and FIG. 15E is a cross-sectional view taken along line L1 of FIG. 15D, prior to sintering of the electrochemical cell stack to reflow the seals.

Referring to FIGS. 15A-15E, while two interconnects 400A and one electrochemical cell 1001 of the cell stack 300C are shown in FIGS. 15A-15B, the stack 300C may include, for example, 20 to 400 cells 1001 and a corresponding number of interconnects 400A. The electrochemical cell 1001 may be an anode supported fuel cell or electrolyzer cell, such as an anode supported solid oxide fuel cell or electrolyzer cell. A first perimeter seal 434 may be disposed on the perimeter of the fuel side of a first one of the interconnects 400A. For example, the first perimeter seal 434 may be formed by depositing a glass or glass-ceramic seal material on the fuel side of the first interconnect 400A, using a dispensing, screen printing, or stencil printing process. The first perimeter seal 434 may have an as-deposited thickness ranging from about 700 µm to about 1500 µm, such as from about 800 µm to about 1200 µm. An anode contact layer 318, such as a nickel mesh or another electrically conductive layer may be disposed on the fuel flow field 430, inside of the first perimeter seal 434. An anode supported cell 1001 may be disposed on the anode contact layer 318.

Foil seals 460 may be disposed in seal recesses 425 of the air side of a second one of the interconnects 400A, as discussed above with respect to FIG. 14C. For example, the foil seals 460 may be attached to the second interconnect 400A using glue or a cured glass or glass-ceramic material, which may be provided into the recessed portions 422R of the riser seal surfaces 422. A cell seal 452 and a second perimeter seal 454 may be formed on the air side of the second interconnect 400A using, for example, a dispensing, screen printing, or stencil printing process. The cell seal 452 may have a rectangular shape. One side of the cell seal 452 may directly contact the foil seals 460 and the air side of the second interconnect 400A, while the opposite side of the cell seal 452 may directly contact the periphery of the electrochemical cell 1001. For example, the cell seal 452 may surround the cathode 316 and be located on (e.g., in direct contact with) the electrolyte 312 of the air side of the electrochemical cell 1001. The cell seal 452 is located inward of the fuel inlets 402 and the fuel outlets 404 in the interconnect 404A, and prevents fuel from flowing from the fuel inlets 402 onto the cathode 316. The cell seal 452 may include extensions 452E that extend horizontally from corners of the cell seal 452 to contact the second perimeter seal 454 over the foil seals 460. The cell seal 452 may have an as-deposited thickness ranging from about 100 µm to about 500 µm, such as from about 200 µm to about 400 µm.

The second perimeter seal 454 may be disposed on the perimeter of the air side of the second interconnect 400A using, for example, a dispensing, screen printing, or stencil printing process. The second perimeter seal 454 may directly contact the foil seals 460, the air side of the second interconnect 400A, and the first perimeter seal 434. In particular, the first and second perimeter seals 434, 454 may overlap in a vertical direction and contact each other, as shown in FIG. 15E. The second perimeter seal 454 may have an as-deposited thickness ranging from about 700 µm to about 1500 µm, such as from about 800 µm to about 1200 µm.

In some embodiments, the combined as-deposited thickness of the perimeter seals 434, 454 may range from about 1400 µm to about 3000 µm, such as from about 1700 µm to about 2200 µm. The thicknesses of each of the perimeter seals 434, 454 may be the same or may be different from each other. As shown in FIG. 15E, the second perimeter seal 454 is located in contact with the foil seal 460.

The stack 300C may be sintered (i.e., heated) and compressed to reflow the seals. In particular, the perimeter seals 434, 454 may be compressed, such that the interconnects 400A are brought closer together and the cell seal 452 contacts the electrochemical cell 1001 and the foil seal 460. In some embodiments, the perimeter seals 434, 454 may flow together and form a single combined perimeter seal 464. The combined perimeter seal 464 encloses an area between the foil seal 460 connected to the air side of one interconnect 400A and the fuel side of the periphery an adjacent interconnect 400A in the stack 300C, as shown in FIG. 15E. Air enters the air channels 408 between the foil seal 460 and the air side ribs 406 from outside the interconnect 400A. However, the perimeter seals 434, 454 (e.g., the combined perimeter seal 464) prevent fuel from flowing outside the periphery of the stack 300C between adjacent interconnects 400A. After sintering, the foil seal 460 contacts both the cell seal 452 and the second peripheral seal 454 (which may be part of the combined perimeter seal 464). The periphery of the electrochemical cell 1001 is laterally offset inward from the perimeter seals 434, 454 (e.g., the combined perimeter seal 464).

In some embodiments, the cathode 316 may be formed of a strontium-containing material, such as LSM and the electrolyte may be formed of a stabilized zirconia. In such embodiments, the electrochemical cell 1001 may include a barrier layer 317. The barrier layer 317 is configured to reduce and/or prevent the formation of strontium zirconate (SrZrO₃) resulting from a reaction between strontium and zirconia. The barrier layer 317 is located between the electrolyte 312 and the cathode 316, and may extend outside of the perimeter of the cathode 316. The barrier layer 317 may be formed of a doped ceria material, such as samaria doped ceria or gadolinia doped ceria. Alternatively, the barrier layer 317 may be omitted.

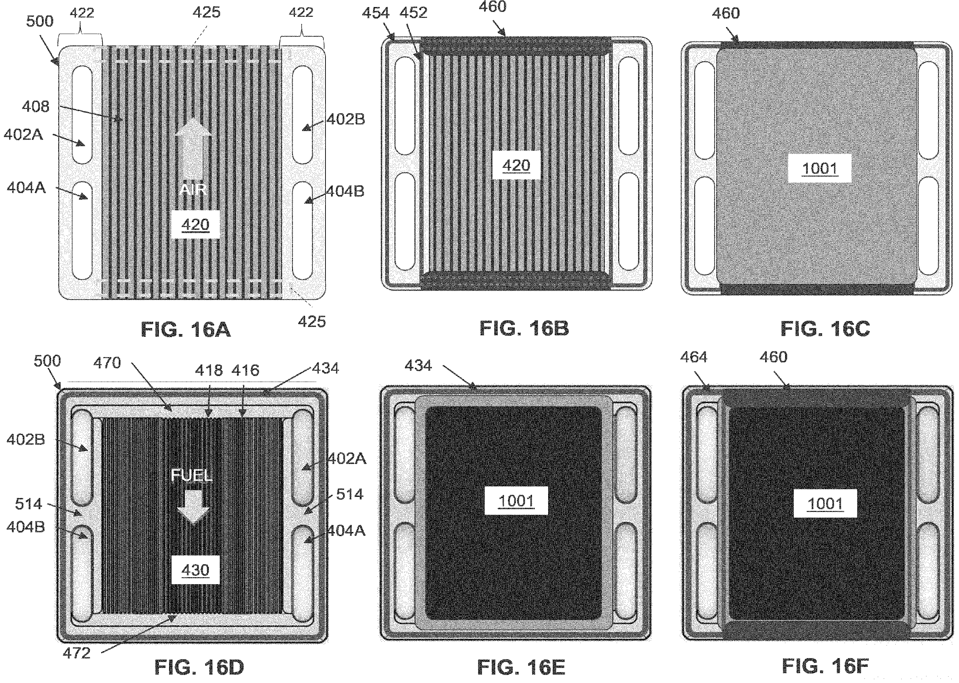

Referring to FIGS. 16A-16F, in another alternative embodiment, the foil seals 460 may also be used in a counterflow or co-flow interconnect 500 in which the air channels 408 and the fuel channels 418 extend parallel to each other. The interconnect 500 may be similar to the interconnects 400 and 400A. As such, only the differences therebetween will be described in detail.

Referring to FIGS. 16A-16C, the air side of the interconnect 500 may include an air flow field 420 having air channels 408 that extend in a first direction. Seal recesses 425 may be formed on opposing first and second sides of the air flow field 420. A first fuel inlet 402A and a first fuel outlet 404A may be formed on a third side of the interconnect 500, and a second fuel inlet 402B and a fuel outlet 404B may be formed on an opposing fourth side of the interconnect 500, wherein the fuel inlets and outlets are surrounded by riser seal surfaces 422 that flank the air flow field 420.

A perimeter seal 454 may be formed around the perimeter of the air side, and a cell seal 452 may be formed inside of the perimeter seal adjacent to the air flow field 420. Foil seals 460 may be disposed in the seal recesses 425. A fuel cell 1001 may be disposed on the air flow field 420, covering and contacting the cell seal 452 and the foil seal 460.

Referring to FIGS. 16D-16F, the fuel side of the interconnect 500 may include a fuel flow field 430 comprising fuel channels 418 and disposed between the fuel inlets 402A, 402B and the fuel outlets 404A, 404B. The fuel inlets 402A, 402B may be fluidly connected to first ends of the fuel channels 418 by a fuel inlet manifold 470. The fuel outlets 404A, 404B may be fluidly connected to opposing second ends of the fuel channels 418 by a fuel outlet manifold 472. In one embodiment, the outer (i.e., peripheral) fuel channel depths may be different from inner (i.e., middle) fuel channel depths and/or the outer (i.e., peripheral) fuel rib pitch may be different from the inner (i.e., middle) fuel rib pitch. For example, the outer (i.e., peripheral) fuel channel depths may be shallower than the inner (i.e., middle) fuel channel depths and/or the outer (i.e., peripheral) fuel rib pitch may be smaller than the inner (i.e., middle) fuel rib pitch to make the fuel pressure drop more even across the interconnect and to reduce the likelihood that the fuel will flow through the shortest paths between the fuel inlets and the fuel outlets. The inlet and outlet manifolds 470, 472 may be recessed, such that bottom surfaces of the inlet and outlet manifolds 470, 472 are coplanar with or below bottom surfaces of the fuel channels 418. In this embodiment, the neck portions 514 of the interconnect 500 are raised above the inlet and outlet manifolds 470, 472. The neck portions 514 may be coplanar with tops of the fuel ribs 416. The first neck portion 514 located between the first fuel inlet 402A and the first fuel outlet 404A prevents the fuel from flowing directly between the first fuel inlet 402A and the first fuel outlet 404A without passing through the fuel inlet manifold 470, the fuel channels 418 and the fuel outlet manifold 472. The second neck portion 514 located between the second fuel inlet 402B and the second fuel outlet 404B prevents the fuel from flowing directly between the second fuel inlet 402B and the second fuel outlet 404B without passing through the fuel inlet manifold 470, the fuel channels 418 and the fuel outlet manifold 472.

A perimeter seal 434 may be disposed on the perimeter of the fuel side of the interconnect 500. The perimeter seal surrounds the fuel flow field 430 and the fuel inlets and outlets 402A, 402B, 404A, 404B. A fuel cell 1001 is located on the fuel ribs 416 of the fuel flow field 430 and over the fuel manifolds 470, 472. The perimeter seal 434 may overlap with the perimeter seal 454 of an adjacent interconnect 500 to form the combined perimeter seal 464. The cell seal 452 and the foil seal 460 of the adjacent interconnect 500 may overlap with the perimeter of the electrochemical cell 1001. The electrochemical cell 1001 contacts the cell seal 452.

Referring to FIGS. 16A and 16D, the air channels 408 and the fuel channels 418 may both extend in the same direction. The interconnect 500 may be configured such that fuel and air flow across the interconnect in opposing directions. As such, the interconnect 500 may have a counter flow configuration. Alternatively, the interconnect 500 may have a co-flow configuration.

The seal structure according to various embodiments of the present disclosure prevents forming a fuel leak path and also permits crossflow interconnect configuration for high power density without complex shapes. The seal structure is suitable for anode supported fuel cells or electrolyzer cells with a thin electrolyte layer which can be prone to cracking at weak points. While a solid oxide fuel cell stack is described above, alternative embodiments may include other electrochemical devices, such as solid oxide electrolyzer cells.

While solid oxide fuel cell interconnects, end plates, and electrolytes are described above in various embodiments, embodiments can include any other fuel cell interconnects or end plates, such as molten carbonate, phosphoric acid or PEM fuel cell electrolytes, interconnects or end plates, or any other shaped metal or metal alloy or compacted metal powder or ceramic objects not associated with fuel cell systems.

Fuel cell systems of the embodiments of the present disclosure are designed to reduce greenhouse gas emissions and have a positive impact on the climate.

The foregoing method descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular. Further, any step or component of any embodiment described herein can be used in any other embodiment.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

**The invention also refers to the following embodiments, wherein the term "claim" means "embodiment":**
1. An electrochemical cell stack, comprising:
   a first interconnect;
   a second interconnect;
   an electrochemical cell located between the first interconnect and the second interconnect, wherein the electrochemical cell is laterally offset from ends of the first interconnect and the second interconnect; and
   a fuel impermeable, hermetically sealed wall contacting opposing surfaces of the first interconnect and the second interconnect, wherein the fuel impermeable, hermetically sealed wall comprises a stack of a glass or glass ceramic seal and a gas impermeable layer.
2. The electrochemical cell stack of claim 1, wherein the electrochemical cell comprises a solid oxide fuel cell.
3. The electrochemical cell stack of claim 2, wherein the gas impermeable layer comprises a foil.
4. The electrochemical cell stack of claim 3, wherein the foil comprises a metal alloy foil.
5. The electrochemical cell stack of claim 4, wherein the metal alloy foil has a coefficient of thermal expansion which is within 10% of the coefficient of thermal expansion of the fuel cell.
6. The electrochemical cell stack of claim 5, wherein the metal alloy foil comprises a stainless steel foil.
7. The electrochemical cell stack of claim 6, wherein the stainless steel foil comprises an iron-chromium-aluminum-yttrium ferritic stainless steel foil having a dielectric coating on its surfaces.
8. The electrochemical cell stack of claim 7, wherein the dielectric coating of the stainless steel foil directly contacts air side ribs of the first interconnect.
9. The electrochemical cell stack of claim 5, wherein the metal alloy foil comprises a chromium iron alloy comprising 4 to 6 wt.% iron and balance chromium.
10. The electrochemical cell stack of claim 2, wherein the metal alloy foil is rigid and the glass or glass ceramic seal comprises a tape cast portion and a screen-printed portion.
11. The electrochemical cell stack of claim 2, wherein the gas impermeable layer comprises a flexible gasket.
12. The electrochemical cell stack of claim 11, wherein the flexible gasket comprises a metal silicate clay material.
13. The electrochemical cell stack of claim 11, wherein the flexible gasket comprises vermiculite and talc.
14. The electrochemical cell stack of claim 2, wherein the solid oxide fuel cell comprises an anode supported solid oxide fuel cell.
15. The electrochemical cell stack of claim 14, wherein the anode supported solid oxide fuel cell comprises a solid oxide electrolyte, a cathode located on a first side of the electrolyte, and an anode located on a second side of the electrolyte, wherein the anode is thicker than the electrolyte.
16. The electrochemical cell stack of claim 2, wherein the solid oxide fuel cell does not contact the gas impermeable layer.
17. The electrochemical cell stack of claim 2, wherein the solid oxide fuel cell contacts the gas impermeable layer.
18. The electrochemical cell stack of claim 2, wherein:
   the first interconnect comprises a first crossflow interconnect comprising a first fuel flow field comprising first fuel channels separated by first fuel ribs extending in a first direction, and a first air flow field comprising first air channels separated by first air ribs extending in a second direction perpendicular to the first direction; and
   the second interconnect comprises a second crossflow interconnect comprising a second fuel flow field comprising second fuel channels separated by second fuel ribs extending in the first direction, and a second air flow field comprising second air channels separated by second air ribs extending in the second direction perpendicular to the first direction.
19. The electrochemical cell stack of claim 18, wherein the solid oxide fuel cell is laterally offset from ends of the first interconnect and the second interconnect along the second direction.
20. The electrochemical cell stack of claim 18, wherein:
   the first interconnect comprises at least one fuel riser opening surrounded by a riser seal on an air side of the first interconnect; and
   the fuel impermeable, hermetically sealed wall contacting opposing surfaces of the first interconnect and the second interconnect outside the first fuel flow field and outside the second fuel flow field, respectively.
21. The electrochemical cell stack of claim 20, wherein the glass or glass ceramic seal comprises a perimeter seal which extends along a perimeter of the first and the second interconnects.
22. The electrochemical cell stack of claim 21, wherein:
   the fuel impermeable, hermetically sealed wall prevents fuel from flowing out of the first and the second fuel channels outside of the electrochemical cell stack; and
   the second air channels are exposed the outside of the electrochemical cell stack below the fuel impermeable, hermetically sealed wall.
23. The electrochemical cell stack of claim 1, wherein:
   the first interconnect comprises fuel inlets and fuel outlets that extend through the first interconnect, and air channels that are located between the fuel inlets and outlets, and that extend from a first peripheral edge to an opposing second peripheral edge of the first interconnect;
   the gas impermeable layer comprises foil seals extending along the first and second peripheral edges and covering portions of the air channels;
   the glass or glass ceramic seal comprises a first perimeter seal located on the foil seals and surrounding the fuel inlets and outlets, and a second perimeter seal located on the second interconnect surrounding the fuel channels and the fuel inlets and outlets;
   a cell seal is located inside of the first perimeter seal and in contact with the foil seals; and
   the electrochemical cell is located inside of the first and second perimeter seals, and in contact with the cell seal.
24. The electrochemical cell stack of claim 1, wherein the air channels are located between air side ribs, and the foil seals comprise metal alloy foils having a dielectric coating which directly contacts the air side ribs.
25. The electrochemical cell stack of claim 24, wherein the first interconnect comprises seal recesses in which the foil seals are located and in which the air side ribs have a lower height than outside of the seal recesses.
26. The electrochemical cell stack of claim 21, wherein the cell seal comprises seal extensions that extend from corners of the cell seal and contact the first perimeter seal.
27. The electrochemical cell stack of claim 21, wherein:
   the first and second perimeter seals overlap in a vertical direction to form a combined perimeter seal; and
   a total thickness of the first and second perimeter seals is greater than a thickness of the cell seal.

## Claims

1. An electrochemical cell stack, comprising:
a first interconnect;
a second interconnect;
an electrochemical cell located between the first interconnect and the second interconnect, wherein the electrochemical cell is laterally offset from ends of the first interconnect and the second interconnect; and
a fuel impermeable, hermetically sealed wall contacting opposing surfaces of the first interconnect and the second interconnect, wherein the fuel impermeable, hermetically sealed wall comprises a stack of a glass or glass ceramic seal and a gas impermeable layer.

2. The electrochemical cell stack of claim 1, wherein the electrochemical cell comprises a solid oxide fuel cell.

3. The electrochemical cell stack of claim 2, wherein the gas impermeable layer comprises an iron-chromium-aluminum-yttrium ferritic stainless steel foil having a dielectric coating on its surfaces, and wherein the dielectric coating of the stainless steel foil directly contacts air side ribs of the first interconnect.

4. The electrochemical cell stack of claim 2, wherein the gas impermeable layer comprises a chromium iron alloy foil comprising 4 to 6 wt.% iron and balance chromium.

5. The electrochemical cell stack of claim 2, wherein the metal alloy foil is rigid and the glass or glass ceramic seal comprises a tape cast portion and a screen-printed portion.

6. The electrochemical cell stack of claim 2, wherein the gas impermeable layer comprises a flexible gasket comprising a metal silicate clay material or a combination of vermiculite and talc.

7. The electrochemical cell stack of claim 2, wherein the solid oxide fuel cell comprises an anode supported solid oxide fuel cell which comprises a solid oxide electrolyte, a cathode located on a first side of the electrolyte, and an anode located on a second side of the electrolyte, wherein the anode is thicker than the electrolyte.

8. The electrochemical cell stack of claim 2, wherein:
the first interconnect comprises a first crossflow interconnect comprising a first fuel flow field comprising first fuel channels separated by first fuel ribs extending in a first direction, and a first air flow field comprising first air channels separated by first air ribs extending in a second direction perpendicular to the first direction; and
the second interconnect comprises a second crossflow interconnect comprising a second fuel flow field comprising second fuel channels separated by second fuel ribs extending in the first direction, and a second air flow field comprising second air channels separated by second air ribs extending in the second direction perpendicular to the first direction.

9. The electrochemical cell stack of claim 8, wherein the solid oxide fuel cell is laterally offset from ends of the first interconnect and the second interconnect along the second direction.

10. The electrochemical cell stack of claim 8, wherein:
the first interconnect comprises at least one fuel riser opening surrounded by a riser seal on an air side of the first interconnect;
the fuel impermeable, hermetically sealed wall contacting opposing surfaces of the first interconnect and the second interconnect outside the first fuel flow field and outside the second fuel flow field, respectively;
the glass or glass ceramic seal comprises a perimeter seal which extends along a perimeter of the first and the second interconnects;
the fuel impermeable, hermetically sealed wall prevents fuel from flowing out of the first and the second fuel channels outside of the electrochemical cell stack; and
the second air channels are exposed the outside of the electrochemical cell stack below the fuel impermeable, hermetically sealed wall.

11. The electrochemical cell stack of claim 1, wherein:
the first interconnect comprises fuel inlets and fuel outlets that extend through the first interconnect, and air channels that are located between the fuel inlets and outlets, and that extend from a first peripheral edge to an opposing second peripheral edge of the first interconnect;
the gas impermeable layer comprises foil seals extending along the first and second peripheral edges and covering portions of the air channels;
the glass or glass ceramic seal comprises a first perimeter seal located on the foil seals and surrounding the fuel inlets and outlets, and a second perimeter seal located on the second interconnect surrounding the fuel channels and the fuel inlets and outlets;
a cell seal is located inside of the first perimeter seal and in contact with the foil seals; and
the electrochemical cell is located inside of the first and second perimeter seals, and in contact with the cell seal.

12. The electrochemical cell stack of claim 11, wherein the air channels are located between air side ribs, and the foil seals comprise metal alloy foils having a dielectric coating which directly contacts the air side ribs.

13. The electrochemical cell stack of claim 12, wherein the first interconnect comprises seal recesses in which the foil seals are located and in which the air side ribs have a lower height than outside of the seal recesses.

14. The electrochemical cell stack of claim 11, wherein the cell seal comprises seal extensions that extend from corners of the cell seal and contact the first perimeter seal.

15. The electrochemical cell stack of claim 11, wherein:
the first and second perimeter seals overlap in a vertical direction to form a combined perimeter seal; and
a total thickness of the first and second perimeter seals is greater than a thickness of the cell seal.
